(19) Europäisches Patentamt
European Patent Office
Office européen des brevets

(11) **EP 4 706 911 A1**

(12) **EUROPEAN PATENT APPLICATION**
published in accordance with Art. 153(4) EPC

(43) Date of publication:
**11.03.2026 Bulletin 2026/11**

(21) Application number: **24819479.7**

(22) Date of filing: **29.04.2024**

(51) International Patent Classification (IPC):
**B25J 13/08** (2006.01)    **B25J 5/00** (2006.01)
**B25J 9/16** (2006.01)    **B25J 11/00** (2006.01)
**G06V 40/18** (2022.01)    **G06V 40/20** (2022.01)
**G06F 3/04883** (2022.01)    **G06F 3/041** (2006.01)

(52) Cooperative Patent Classification (CPC):
**B25J 5/00; B25J 9/16; B25J 11/00; B25J 13/08;
G06F 3/041; G06F 3/04883; G06V 40/18;
G06V 40/20**

(86) International application number:
**PCT/KR2024/005746**

(87) International publication number:
**WO 2024/253327 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 KR 20230073516**

(71) Applicant: **Samsung Electronics Co., Ltd.
Suwon-si, Gyeonggi-do 16677 (KR)**

(72) Inventors:
• **LEE, Bokyung**
Suwon-si, Gyeonggi-do 16677 (KR)
• **KO, Serin**
Suwon-si, Gyeonggi-do 16677 (KR)
• **BAE, Sowoon**
Suwon-si, Gyeonggi-do 16677 (KR)
• **WON, Yoojin**
Suwon-si, Gyeonggi-do 16677 (KR)
• **HYUN, Sangmin**
Suwon-si, Gyeonggi-do 16677 (KR)

(74) Representative: **Appleyard Lees IP LLP
15 Clare Road
Halifax HX1 2HY (GB)**

(54) **MOBILE ROBOT AND CONTROL METHOD THEREFOR**

(57)    A mobile robot is disclosed. The mobile robot comprises: at least one sensor; a display of which the angle can be adjusted; a driving unit; and one or more processors for identifying a posture change amount of a user for a threshold time on the basis of sensing data acquired through the at least one sensor, identifying that adjustment of the display is necessary when it is identified that the identified posture change amount is less than a threshold change amount, identifying a target position of the display and a target angle of the display when it is identified that adjustment of the position of the display is necessary, and controlling the driving unit on the basis of the target position of the display and the target angle of the display.

FIG. 2

100

110     140     130

AT LEAST ONE SENSOR ↔ PROCESSOR ↔ DRIVER

120

DISPLAY

## Description

[Technical Field]

Apparatuses and methods consistent with the disclosure relate to a mobile robot and a control method therefor, and more particularly, to a mobile robot that adjusts a position of a robot by taking into account a change in user's posture, and a control method therefor.

[Background Art]

With the development of electronic technology, various types of electronic devices are being developed and spread, and recently, technology development for robots that provide services to users and the like has been actively developed.

Robots that drive a specific space to provide services to users may be equipped with a display to provide images to the users. For the mobile robots equipped with such displays, since the mobile robots may not consider real-time changes in the user's posture, the mobile robots may provide an ergonomically inefficient viewing experience when the users adopt various postures. Alternatively, there may be cases where users watch videos in uncomfortable postures.

[Disclosure]

[Technical Solution]

In accordance with an aspect of the disclosure, a mobile robot includes: at least one sensor; a display configured to adjust an angle; a driving unit; and one or more processors configured to identify a posture change amount of a user for a threshold time based on sensing data acquired from the at least one sensor.

The one or more processors may identify that position adjustment of the display is necessary when it is identified that the identified posture change amount is less than a threshold change amount.

The one or more processors may identify a target position of the display and a target angle of the display when it is identified that the position adjustment of the display is necessary.

The one or more processors may control the driving unit based on the target position of the display and the target angle of the display.

In accordance with another aspect of the disclosure, a control method for a mobile robot includes identifying a posture change amount of a user for a threshold time based on sensing data acquired from at least one sensor.

The control method may include identifying that position adjustment of the display whose angle is adjustable is necessary when it is identified that the identified posture change amount is less than a threshold change amount.

The control method may include identifying a target position of the display and a target angle of the display when it is identified that the position adjustment of the display is necessary.

The control method may include controlling the driving unit based on the target position of the display and the target angle of the display.

In accordance with still another aspect of the disclosure, there is provided a non-transitory computer-readable recording medium storing computer instructions that cause a mobile robot to perform an operation when executed by a processor of the mobile robot, in which the operation includes identifying a posture change amount of a user for a threshold time based on sensing data acquired from the at least one sensor.

The operation may include identifying that position adjustment of the display whose angle is adjustable is necessary when it is identified that the identified posture change amount is less than a threshold change amount.

The operation may include identifying a target position of the display and a target angle of the display when it is identified that the position adjustment of the display is necessary.

The operation may include controlling the driving unit based on the target position of the display and the target angle of the display.

[Brief Description of Drawings]

FIG. 1 is a diagram for schematically describing a control method for a mobile robot according to an embodiment.
FIG. 2 is a block diagram illustrating a configuration of a mobile robot according to an embodiment.
FIG. 3 is a flowchart illustrating the control method for a mobile robot according to an embodiment.
FIGS. 4A to 4G are diagrams for describing a method for acquiring user body information according to an embodiment.

FIG. 5 is a flowchart for describing a method for identifying whether position adjustment of a display is necessary according to an embodiment.

FIG. 6 is a diagram for describing a method for identifying whether the position adjustment of the display is necessary according to an embodiment.

FIGS. 7A to 7C are diagrams for describing a method for identifying a target angle of a display according to an embodiment.

FIGS. 8A to 8C are diagrams for describing a method for identifying a target position of a display according to an embodiment.

FIG. 9 is a diagram for describing the method for identifying a target position of a display according to an embodiment.

FIGS. 10A and 10B are diagrams for describing a method for performing evasive movement of a mobile robot according to an embodiment.

FIGS. 11A to 11D are diagrams for describing a specific method for performing evasive movement of a mobile robot according to an embodiment.

FIGS. 12A to 12D are diagrams illustrating a method for recognizing a user's touch intent according to an embodiment.

FIGS. 13A to 13C are diagrams illustrating the method for recognizing a user's touch intent according to an embodiment.

FIG. 14 is a block diagram illustrating a detailed configuration of the mobile robot according to an embodiment.

[Mode for Invention]

Hereinafter, the present disclosure will be described in detail with reference to the accompanying drawings.

After terms used in the present specification are briefly described, the present disclosure will be described in detail.

General terms that are currently widely used were selected as terms used in embodiments of the present disclosure in consideration of functions in the present disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the present disclosure. Therefore, the terms used in the present disclosure should be defined on the basis of the meaning of the terms and the contents throughout the present disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present specification may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

Singular expressions are intended to include plural expressions unless the context clearly indicates otherwise. It will be further understood that the terms "comprises" or "have" used in this specification, specify the presence of stated features, steps, operations, components, parts mentioned in this specification, or a combination thereof, but do not preclude the presence or addition of one or more other features, numerals, steps, operations, components, parts, or a combination thereof.

In the disclosure, a "module" or a "~er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "~er/or" that needs to be implemented by specific hardware.

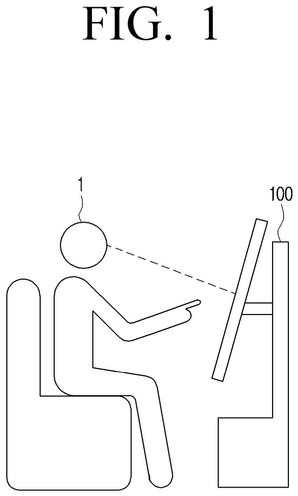

FIG. 1 is a diagram for schematically describing a control method for a mobile robot according to an embodiment.

Referring to FIG. 1, according to an embodiment, a mobile robot 100 may drive through a driving space and reach a destination. The mobile robot 100 may be a robot that moves to a specific location and provides services to a user. For example, the mobile robot 100 may be a robot that includes a display, and provide images to the user through the display. However, the present disclosure is not limited thereto.

According to an embodiment, the mobile robot 100 may acquire sensing data corresponding to user's movement and identify a posture change amount of the user based on the acquired data. According to an embodiment, the mobile robot 100 may acquire location information for various types of body parts of the user, including specific body parts of a user, such as a head, shoulders, and a neck of a user, but is not limited thereto.

According to an embodiment, the mobile robot 100 may adjust a position or display angle of the display included in the mobile robot 100 based on the posture change amount of the user. In this way, the mobile robot 100 may position the display in a position that minimizes physical fatigue by considering the posture change of the user. Accordingly, the user may watch a video while minimizing fatigue, thereby improving user satisfaction.

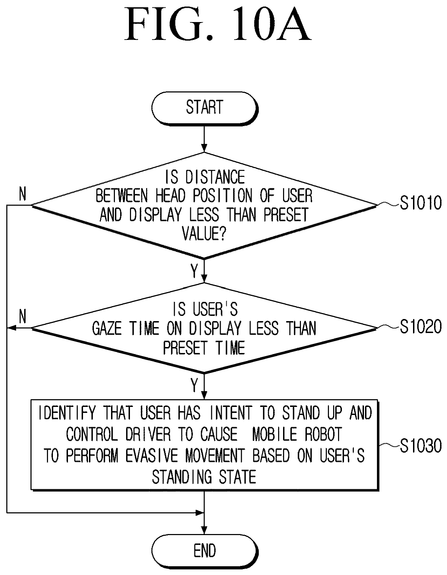

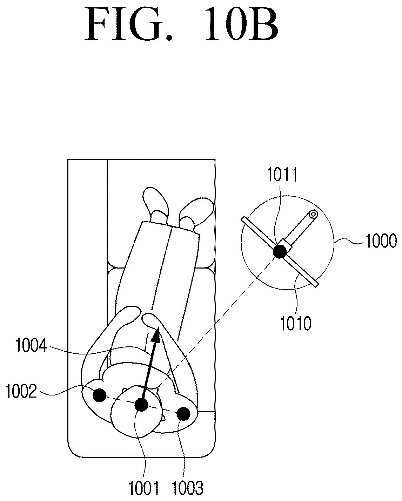

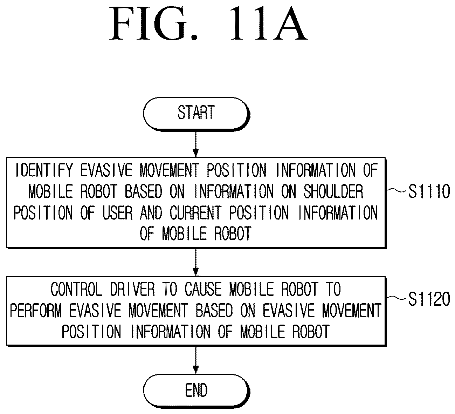

According to one example, the mobile robot 100 may identify the user's intent to stop viewing the display (or intent to stop using the mobile robot) and adjust the position of the display or the mobile robot 100 based on the user's intent. This will be described in detail with reference to FIGS. 10A and 10B and 11A to 11D.

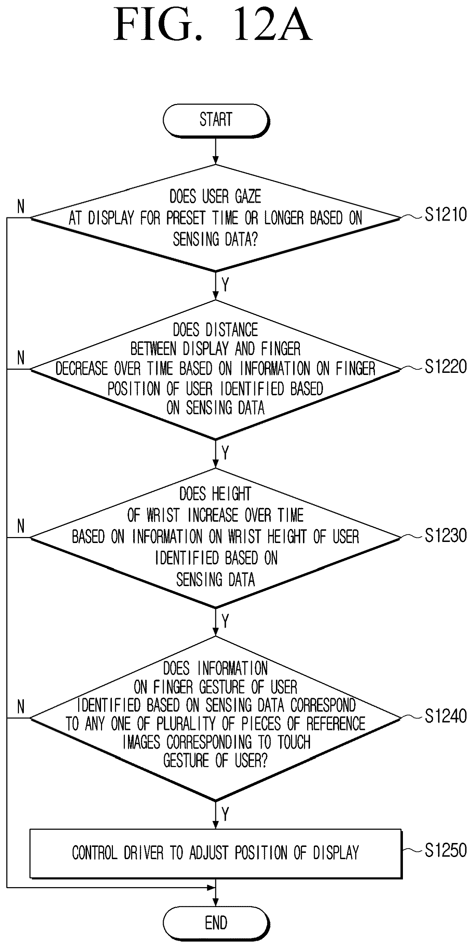

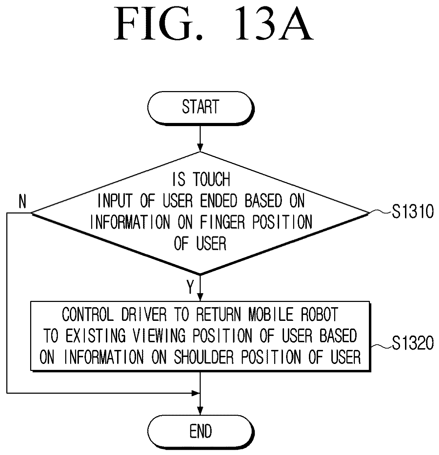

Alternatively, according one example, the mobile robot 100 may identify the user's intent to touch and adjust the position of the display or the mobile robot 100 based on the user's intent. This will be described in detail with reference to FIGS. 12A to 12D and 13A to 13C.

Hereinafter, various embodiments that enhance the user satisfaction by positioning the display or mobile robot in an optimal location in consideration of the user's posture or intent will be described.

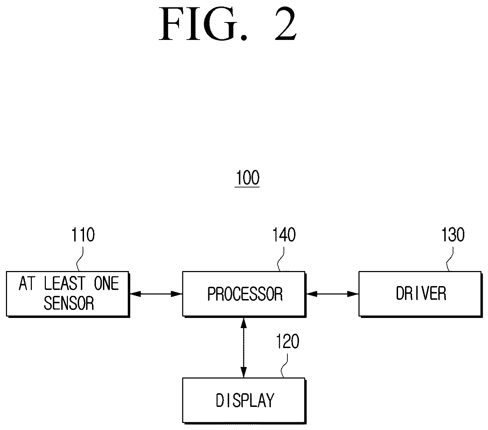

FIG. 2 is a block diagram illustrating a configuration of a mobile robot according to an embodiment.

Referring to FIG. 2, the mobile robot 100 may include at least one sensor 110, a display 120, a driving unit 130, and one or more processors 140.

At least one sensor 110 (hereinafter referred to as a sensor) may include a plurality of sensors of various types. The sensor 110 may measure a physical quantity or detect an operating state of the robot 100 and convert the measured or sensed information into an electrical signal. The sensor 110 may include a camera, and the camera may include a lens for focusing visible light and other optical signals received after being reflected by an object into an image sensor, and an image sensor capable of detecting visible light and other optical signals. Here, the image sensor may include a 2D pixel array divided into a plurality of pixels.

Meanwhile, the camera according to an example may be implemented as a depth camera. Also, according to one example, the sensor 110 may include a thermal imaging sensor that reads a shape as well as a distance sensor such as a light detection and ranging (LIDAR) sensor and a time of flight (TOF) sensor.

The display 120 may be implemented as a display including a self-light emitting element or a display including a non-light emitting element and a backlight. For example, the display 120 may be implemented as various types of displays such as a liquid crystal display (LCD), an organic light emitting diodes (OLED) display, light emitting diodes (LED), a micro LED, a Mini LED, a plasma display panel (PD), a quantum dot (QD) display, and quantum dot light-emitting diodes (QLED). A driving circuit, a backlight unit, and the like, that may be implemented in a form such as a-si TFT, low temperature poly silicon (LTPS) TFT, an organic TFT (OTFT), and the like, may be included in the display 120. Meanwhile, the display 120 may be implemented as a touch screen coupled with a touch sensor, a flexible display, a rollable display, a 3D display, a display to which a plurality of display modules are physically connected, and the like. The processor 140 may control the display 120 to output the output image obtained according to various embodiments described above. Here, the output image may be a high-resolution image of 4K or 8K or higher.

Meanwhile, according to an embodiment, the display 120 may be implemented as an angle-adjustable display. According to one example, the driving unit 130 for adjusting the angle of the display 120 may be provided on one side of the display 120, and the processor 140 may adjust the display angle of the display 120 through the driving unit 130.

The driving unit 130 is a device capable of driving the mobile robot 100. The driving unit 130 may adjust a driving direction and a driving speed under the control of the one or more processors 140. The driving unit 130 according to an example may include a power generating device (e.g., a gasoline engine, a diesel engine, a liquefied petroleum gas (LPG) engine, an electric motor, etc. depending on fuel (or energy source) used) that generates power for the mobile robot 100 to drive, and a steering device (e.g., manual steering, hydraulics steering, electronic control power steering (EPS), etc.) for controlling a driving direction, driving devices (e.g., wheels, propellers, etc.) that drive the mobile robot 100 according to power, etc. Here, the driving unit 130 may be modified according to the driving type (e.g., wheel type, walking type, flight type, etc.) of the mobile robot 100.

Meanwhile, according to an embodiment, the driving unit 130 may not only drive the mobile robot 100 but also adjust the display angle of the display 120. According to one example, the driving unit 130 may include at least one of a first driving unit capable of driving the mobile robot 100 and a second driving unit capable of adjusting the display angle of the display 120.

One or more processors 140 (hereinafter referred to as processors) are electrically connected to at least one sensor 110, the display 120, and the driving unit 130 to control the overall operation of the robot 100. The processor 140 may be composed of one or a plurality of processors. Specifically, the processor 140 may perform an operation of the robot 100 according to various embodiments of the present disclosure by executing at least one instruction stored in the memory (not illustrated).

According to an embodiment, the processor 140 may be implemented by a digital signal processor (DSP), a microprocessor, a graphics processing unit (GPU), an artificial intelligence (AI) processor, a neural processing unit (NPU), or a time controller (TCON) that processes a digital image signal. However, the processor 110 is not limited thereto, and may include one or more of a central processing unit (CPU), a micro controller unit (MCU), a micro processing unit (MPU), a controller, an application processor (AP), a communication processor (CP), and an ARM processor, or may be defined by these terms. In addition, the processor 140 may be implemented by a system-on-chip (SoC) or a large scale integration (LSI) in which a processing algorithm is embedded, or may be implemented in the form of an application specific integrated circuit (ASIC) and a field programmable gate array (FPGA).

According to an embodiment, the processor 140 may be implemented by a digital signal processor (DSP), a microprocessor, or a time controller (TCON). However, the processor 110 is not limited thereto, and may include one or more of a central processing unit (CPU), a micro controller unit (MCU), a micro processing unit (MPU), a controller, an application processor (AP), a communication processor (CP), and an ARM processor, or may be defined by these terms. In addition, the processor 140 may be implemented by a system-on-chip (SoC) or a large scale integration (LSI) in which a processing algorithm is embedded, or may be implemented in the form of a field programmable gate array (FPGA).

According to an embodiment, the processor 140 may identify the posture change amount of the user. According to an example, the processor 140 may identify the posture change amount of the user for a threshold time based on the sensing data acquired from at least one sensor 110.

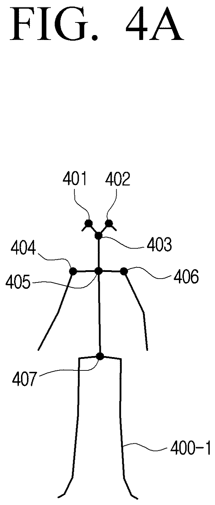

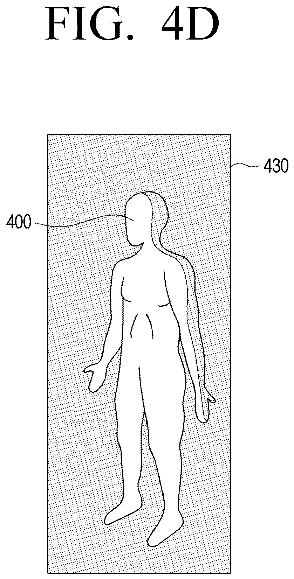

Here, the posture change amount of the user refers to a position change amount of a specific body part of a user over time. According to one example, the posture change amount of the user may include at least one of a change amount in a head position of a user, a change amount of a shoulder position of a user, or a change amount in a neck position of a user, but is not limited thereto. It goes without saying that the posture change amount of the user may also include at least one of a change amount in an eye position or body position of a user. For example, when at least one sensor 110 is implemented as a camera sensor, the processor 140 may acquire an image including a user's image in real time through the camera sensor, and the processor 140 may identify the posture change amount of the user based on the image acquired in real time. This will be described in detail with reference to FIGS. 4A to 4G.

Meanwhile, according to an example, the threshold time may be calculated based on the time at which the user's movement is detected. For example, the processor 140 may identify the posture change amount of the user from a time at which the user's movement is detected based on the sensing data acquired from the sensor to a first point in time. Here, when the user no longer moves, the first point in time may be a point in time after a preset time has elapsed from the point in time when the user's movement is no longer detected, but is not limited thereto.

According to an embodiment, the processor 140 may identify whether the position adjustment of the display 120 is necessary based on the identified posture change amount. According to one example, when the identified posture change amount is determined to be less than a threshold change amount, the processor 140 may identify that the position adjustment of the display 120 is necessary. Here, the threshold change amount refers to a threshold change amount corresponding to each specific body part of a user, and according to one example, information on the threshold change amount corresponding to each specific body part of the user may be pre-stored in the memory (not illustrated).

For example, when the change amount in the head position of the user, the change amount in the shoulder position of the user, and the change amount in the neck position of the user are each identified based on the sensing data acquired from the sensor 110, the processor 140 may compare a position change amount of each identified body part and a threshold change amount corresponding to each of the user's body parts. When it is identified that the change amount in the head position of the user, the change amount in the shoulder position of the user, and the change amount in the neck position of the user are each less than the threshold change amount, the processor 140 may identify that the position adjustment of the display 120 is necessary.

According to an embodiment, when it is identified that the position adjustment of the display 120 is necessary, the processor 140 may identify the target position of the display 120 and the target angle of the display 120. Here, the target position of the display 120 is information about the position of the display 120 adjusted based on the posture change of the user. According to one example, the position of the display 120 may be a coordinate value identified based on a center point of the display. Meanwhile, the target angle of the display 120 means information about the display angle of the display 120 adjusted based on the posture change of the user.

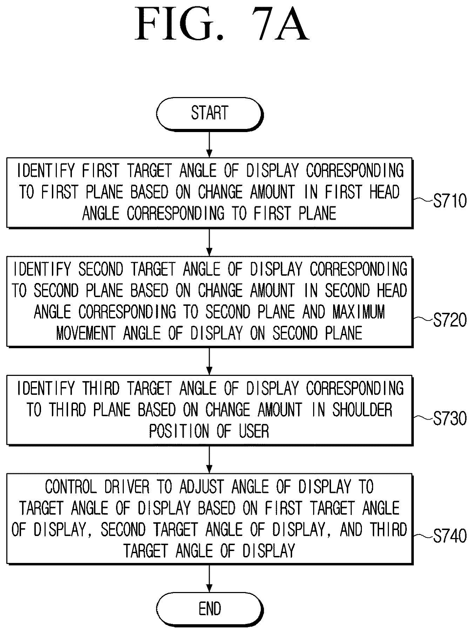

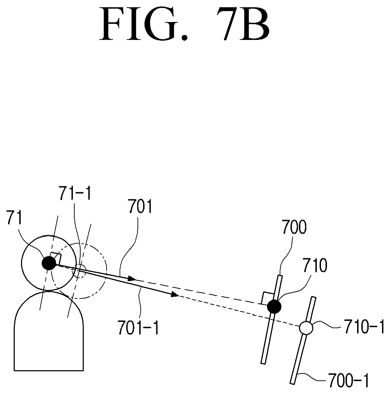

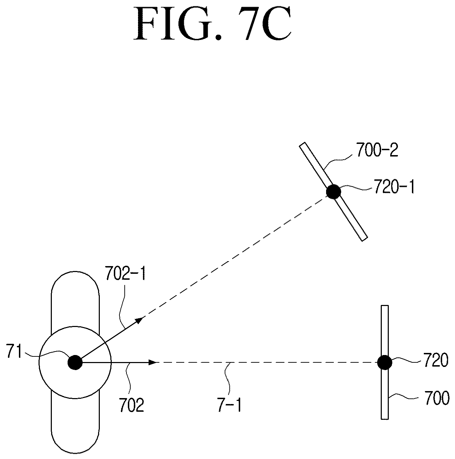

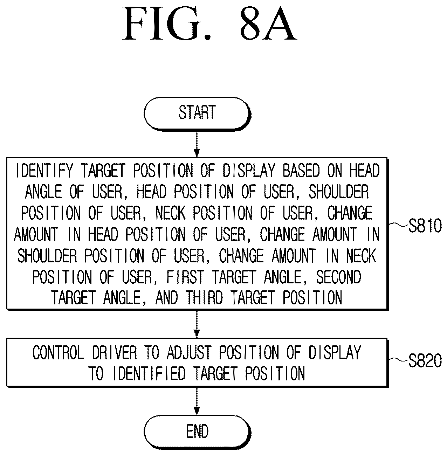

According to one example, when the position adjustment of the display 120 is necessary as the change amount in the head position of the user, the change amount in the shoulder position of the user, and the change amount in the neck position of the user are each less than the threshold change amount, the processor 140 may identify the target angle based on a change amount in a head angle of a user, and identify the target position of the display based on the identified target angle and the change amount in the head position of the user, the change amount in the shoulder position of the user, and the change amount in the neck position of the user. This will be described in detail with reference to FIGS. 7 and 8A to 8C.

According to an embodiment, when the target position and target angle of the display 120 are identified, the processor 140 may control the driving unit 130 based on the identified target position and target angle of the display 120. According to one example, the driving unit 130 may include at least one of a first driving unit capable of driving the mobile robot 100 and a second driving unit capable of adjusting the display angle of the display 120. The processor 140 may control at least one of the first driving unit and the second driving unit so that the display 120 is positioned at the target position and displays a video at the target angle.

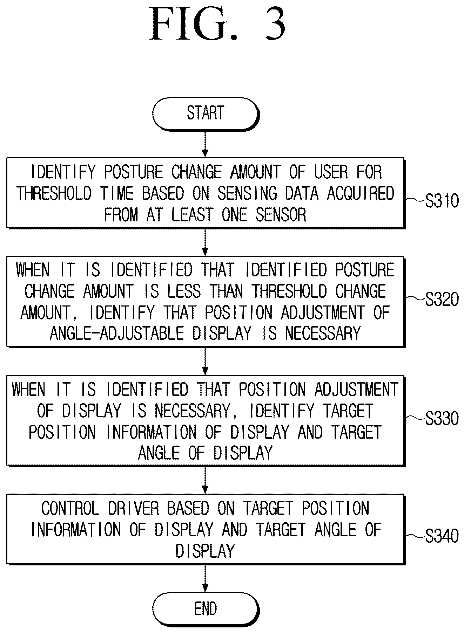

FIG. 3 is a flowchart for describing the control method for a mobile robot according to an embodiment.

Referring to FIG. 3, according to an embodiment, the control method may identify the posture change amount of the user for the threshold time based on the sensing data acquired from at least one sensor 110 (S310). According to one embodiment, when at least one sensor 110 is implemented as the camera sensor, the processor 140 may acquire the image from the camera sensor. Based on the acquired image, the processor 140 may identify the posture change amount of the user for the threshold time. For example, the processor 140 may identify the posture change amount of the user from the time at which the user's movement is detected to the first point in time, when the user's movement is detected based on the sensing data acquired from the sensor. Here, when the user no longer moves, the first point in time may be a point in time after a preset time has elapsed from the point in time when the user's movement is no longer detected.

Meanwhile, according to one example, the processor 140 may identify, based on the acquired sensing data, the posture change amount of the user for the threshold time, including at least one of the change amount in the head position of the user, the change amount in the shoulder position of the user, or the change amount in the neck position of the user.

Next, according to an embodiment, when it is identified that the identified posture change amount is less than the threshold change amount, the control method may identify that the position adjustment of the angle-adjustable display 120 is necessary (S320).

According to one example, the processor 140 may compare the posture change amount of the user for the threshold time, including at least one of the change amount in the head position of the user, the change amount in the shoulder position of the user, or the change amount in the neck position of the user acquired from the sensing data, with information about the threshold change amount corresponding to each of the user's body parts stored in the memory (not illustrated), to identify whether the position change amount corresponding to each of the plurality of body parts is less than the threshold change amount.

When the processor 140 identifies that each of the position change amounts corresponding to each of the plurality of body parts is less than the threshold change amount, the processor 140 may identify that the position adjustment of the display 120 is necessary.

Next, according to an embodiment, when it is identified that the position adjustment of the display 120 is necessary, the control method may identify the target position of the display 120 and the target angle of the display 120 (S330). According to one example, the processor 140 may first identify the change amount in the head angle of the user based on the sensing data acquired from the sensor 110, and may identify the target angle based on the identified change amount in the head angle of the user. In addition, the processor 140 may identify the target position of the display based on the identified target angle, the change amount in the head position of the user, the change amount in the shoulder position of the user, and the change amount in the neck position of the user.

Next, according to an embodiment, the control method may control the driving unit 130 based on the target position of the display 120 and the target angle of the display 120 (S340). According to one example, when the target position and target angle of the display 120 are each identified, the processor 140 may control the driving unit 130 to position the display 120 at the target position and display the video at the target angle.

FIGS. 4A to 4G are diagrams for describing a method for acquiring user body information according to an embodiment.

According to an embodiment, the processor 140 may acquire user body information based on the sensing data acquired from at least one sensor 110. According to one example, the user body information may include, but is not limited to, at least one of the head angle, head position, shoulder position, neck position, eye position, body position, and gaze information of the user, as well as the change amount in the position or angle corresponding to each body part. Based on the acquired user's body information, the processor 140 may identify whether the position adjustment of the display 120 is necessary, and if so, may adjust the position or display angle of the display 120 based on the acquired user's body information. Meanwhile, the information on the positions corresponding to each of the plurality of user's body parts, including the head position, the shoulder position, the neck position, the eye position, and the body position, may be coordinate information, or may be vector point information corresponding to the coordinates.

Referring to FIG. 4A, according to an embodiment, the processor 140 may acquire user skeleton information 400-1 based on the sensing data acquired from at least one sensor 110. According to one example, the user skeleton information 400-1 may include information on eye positions 401 and 402, a head position 403, shoulder positions 404 and 406, a neck position 405, and a body position 407 corresponding to the user. The position information corresponding to each of the user's body parts may be vector point type information, but is not limited thereto.

Meanwhile, according to an embodiment, the processor 140 may acquire the user's skeleton information 400-1 in real time through at least one sensor 110, and the processor 140 may identify the position change amount corresponding to each body part of the user through the acquired skeleton information 400-1.

According to an embodiment, the processor 140 may also identify the head angle of the user and the change amount in the head angle corresponding to each of multiple planes.

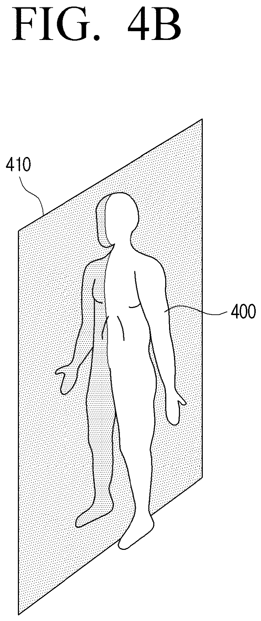

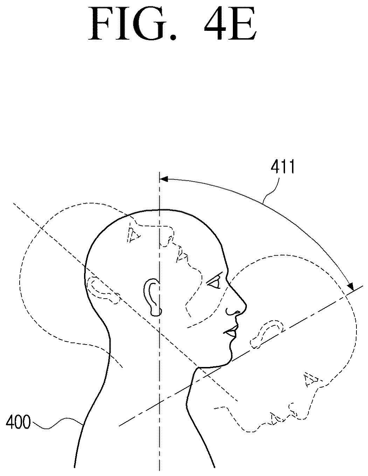

According to one example, the processor 140 may identify a first head angle of a user corresponding to a first plane. Here, , as illustrated in FIG. 4B, the first plane refers to a plane 410 that divides a body of a user 400 into left and right, i.e., a sagittal plane. According to one example, as illustrated in FIG. 4E, the processor 140 may identify the first head angle 411 of the user 400 on the first plane using the sensing data acquired from at least one sensor 110. According to one example, the processor 140 may identify the change amount in the first head angle (or the change amount in the first head angle) for the threshold time based on the sensing data. Here, a reference line for identifying the first head angle 411 is parallel to a first vector (or the ground vector) perpendicular to the ground.

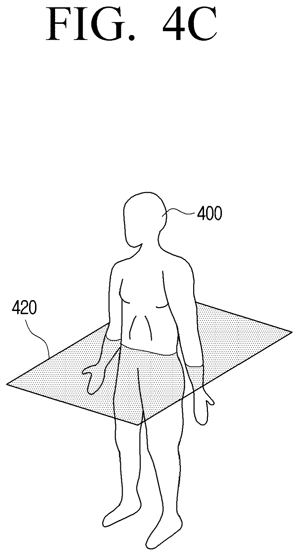

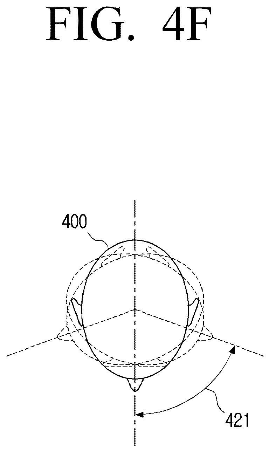

According to one example, the processor 140 may identify a second head angle of a user corresponding to a second plane. Here, the second plane refers to a plane 420 that divides the body of the user 400 into upper and lower parts, i.e., a transverse plane, as illustrated in FIG. 4C. According to one example, as illustrated in FIG. 4F, the processor 140 may identify a second head angle 421 of the user 400 on the second plane using the sensing data acquired from at least one sensor 110. Meanwhile, according to one example, the processor 140 may identify the change amount in the second head angle (or the change amount in the second head angle) for the threshold time based on the sensing data.

Here, the reference line for identifying the second head angle 421 is parallel to a second vector obtained by calculating an outer product of a vector connecting the first eye position 401 and the second eye position 402 among multiple eye positions 401 and 402 and a vector connecting the neck position 405 and the head position 403.

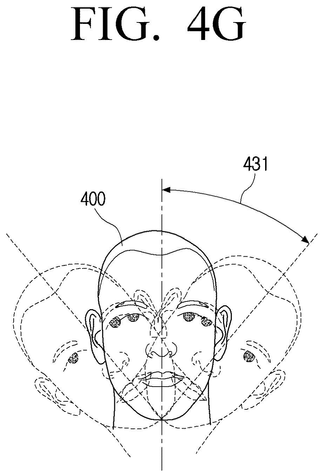

According to one example, the processor 140 may identify a third head angle of a user corresponding to a third plane. Here, as illustrated in FIG. 4C, the third plane refers to a plane 430 that divides the body of the user 400 into ventral and dorsal sides, i.e., a coronal plane. According to one example, as illustrated in FIG. 4G, the processor 140 may identify a third head angle 431 of the user 400 on the third plane using the sensing data acquired from at least one sensor 110. According to one example, the processor 140 may identify the change amount in the third head angle (or the change amount in the third head angle) for the threshold time based on the sensing data. Here, a reference line for identifying the third head angle 431 is parallel to a first vector (or the ground vector) perpendicular to the ground.

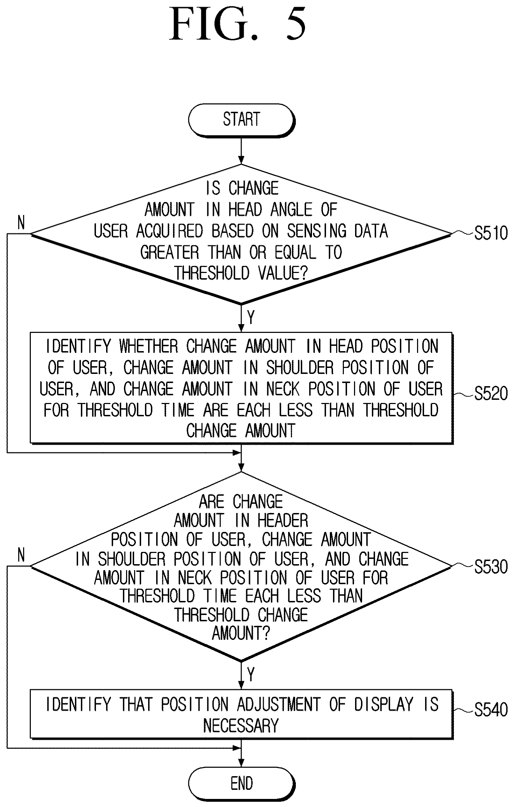

FIG. 5 is a diagram for describing a method for identifying whether position adjustment of a display is necessary according to an embodiment.

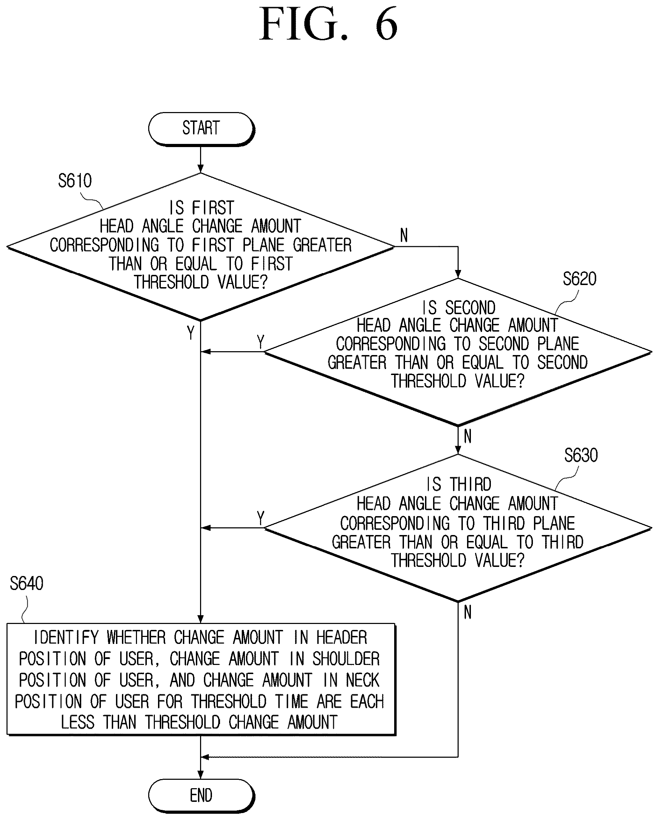

Referring to FIG. 5, according to an embodiment, the control method may identify whether the change amount in the head angle of the user acquired based on the sensing data is greater than or equal to a threshold value (S510). According to one example, information about a threshold value corresponding to the change amount in the head angle of the user may be stored in the memory (not illustrated). According to an example, the processor 140 may identify the change amount in the first head angle of the user corresponding to a user's first plane for the threshold time and identify whether the identified change amount in the first head angle is greater than or equal to the threshold value. This will be described in detail with reference to FIG. 6.

Next, according to an embodiment, when the change amount in the head angle of the user is greater than or equal to the threshold value (S510 Y), the control method may identify whether each of the change amount in the head position of the user, the change amount in the shoulder position of the user, and the change amount in the neck position of the user for the threshold time is less than a threshold change amount (S520).

According to one example, when the processor 140 identifies that the change amount in the first head angle of the user is greater than or equal to a threshold value, the processor 140 may identify the change amount in the head position of the user, the change amount in the shoulder position of the user, and the change amount in the neck position of the user for the threshold time based on the skeleton information 400-1 corresponding to the user, respectively.

Next, according to an embodiment, the control method may identify whether the change amount in the head position of the user, the change amount in the shoulder position of the user, and the change amount in the neck position of the user are each less than the threshold change amount for the threshold time (S530). According to one example, the processor 140 may compare the change amount in the head position of the user, the change amount in the shoulder position of the user, and the change amount in the neck position of the user with the information about threshold change amounts corresponding to each user's body part stored in the memory (not illustrated) to identify whether each change amount is less than the threshold change amount.

Next, according to an embodiment, the control method may identify that the position adjustment of the display 120 is necessary when the change amount in the head position of the user, the change amount in the shoulder position of the user, and the change amount in the neck position of the user are each less than the threshold change amount (S530 Y).

Meanwhile, according to an embodiment, the processor 140 may identify whether the change amount in the head angle of the user is greater than or equal to the threshold value based on the gaze information of the user. According to one example, the processor 140 may identify the gaze information of the user for the display 120 based on the eye position, head position, and neck position of the user identified based on the sensing data. According to one example, when it is identified that the user is gazing at the display 120 based on the identified gaze information of the user, the processor 140 may identify whether the change amount in the head angle of the user acquired based on the sensing data, is greater than or equal to the threshold value. In this case, when it is identified that the user is gazing at the display 120 for a preset time, the processor 140 may identify whether the change amount in the head angle of the user acquired based on the sensing data is greater than or equal to the threshold value.

Accordingly, the mobile robot 100 may adjust the position of the display 120 to ensure smooth viewing of video when the user is viewing the video through the display 120.

FIG. 6 is a diagram illustrating a method for identifying whether the position adjustment of the display is necessary according to an embodiment.

Referring to FIG. 6, according to an embodiment, the control method may first identify whether a change amount in a first head angle corresponding to the first plane is greater than or equal to a first threshold value (S610). According to an example, the first threshold value corresponding to the first plane, the second threshold value corresponding to the second plane, and the third threshold value corresponding to the third plane may be stored in the memory (not illustrated). Based on the information stored in the memory (not illustrated), the processor 140 may first identify whether the change amount in the first head angle of the user for the threshold time corresponding to the first plane is greater than or equal to the first threshold value corresponding to the first plane.

Next, according to an embodiment, when the change amount in the first head angle is greater than or equal to the first threshold value (S610: Y), the control method may identify whether each of the change amount in the head position of the user, the change amount in the shoulder position of the user, and the change amount in the neck position of the user for the threshold time is less than the threshold change amount (S640). According to an example, when it is identified that the change amount in the first head angle of the user for the threshold time corresponding to the first plane is greater than or equal to the first threshold value corresponding to the first plane, the processor 140 may identify whether each of the change amount in head position of the user, the change amount in the shoulder position of the user, and the change amount in the neck position of the user identified based on the skeleton information 400-1 is less than the threshold change amount.

According to an embodiment, when the control method identifies that the change amount in the first head angle is less than the first threshold value (S610: N), the processor may identify whether the change amount in the second head angle corresponding to the second plane is greater than or equal to the second threshold value (S620). According to an example, the processor 140 may identify whether the change amount in the second head angle of the user for the threshold time corresponding to the second plane is greater than or equal to the second threshold value corresponding to the second plane based on information stored in the memory (not illustrated).

According to an embodiment, when the change amount in the second head angle is greater than or equal to the second threshold value (S620: Y), the control method may identify whether each of the change amount in the head position of the user, the change amount in the shoulder position of the user, and the change amount in the neck position of the user for the threshold time is less than the threshold change amount (S640). According to an example, when it is identified that the change amount in the second head angle of the user for the threshold time corresponding to the second plane is greater than or equal to the second threshold value corresponding to the second plane, the processor 140 may identify whether each of the change amount in head position of the user, the change amount in the shoulder position of the user, and the change amount in the neck position of the user identified based on the skeleton information 400-1 is less than the threshold change amount.

According to an embodiment, when the change amount in the second head angle is less than the second threshold value (S620: N), the control method may identify whether the change amount in the third head angle corresponding to the third plane is greater than or equal to the third threshold value (S630). According to an example, the processor 140 may identify whether the change amount in the third head angle of the user for the threshold time corresponding to the third plane is greater than or equal to the third threshold value corresponding to the third plane based on information stored in the memory (not illustrated).

According to an embodiment, when the change amount in the third head angle is greater than or equal to the third threshold value (S630: Y), the control method may identify whether each of the change amount in the head position of the user, the change amount in the shoulder position of the user, and the change amount in the neck position of the user for the threshold time is less than the threshold change amount (S640). According to an example, when it is identified that the change amount in the third head angle of the user for the threshold time corresponding to the third plane is greater than or equal to the third threshold value corresponding to the third plane, the processor 140 may identify whether each of the change amount in head position of the user, the change amount in the shoulder position of the user, and the change amount in the neck position of the user identified based on the skeleton information 400-1 is less than the threshold change amount.

Accordingly, the mobile robot 100 may identify whether the adjustment of the display 120 is necessary when the head angle of the user changes to greater than or equal to the threshold value.

FIGS. 7A to 7C are diagrams for describing a method for identifying a target angle of a display according to an embodiment.

Referring to FIG. 7A, according to an embodiment, the control method first identifies a first target angle of the display 120 corresponding to the first plane based on the change amount in the first head angle corresponding to the first plane (S710). Here, the first target angle of the display 120 corresponding to the first plane refers to the target angle of the display 120 on the first plane. According to one example, the processor 140 may identify the first target angle corresponding to the first plane using the following Equation 1.

[Equation 1]

$$\triangle D_{\theta_s} = \triangle H_{\theta_s}$$

Here, $H_{\theta s}$ denotes the head angle (or first head angle) of the user on the first plane, and $\triangle H_{\theta s}$ denotes the change amount of the head angle (or first head angle) of the user on the first plane. $D_{\theta s}$ denotes the display angle (or first angle) of the display 120 on the first plane, and $\triangle D_{\theta s}$ denotes the change amount of the display angle of the display 120 on the first plane. Here, the first angle may be, but is not limited to, an angle between a ground vector and a vector corresponding to a direction (or the display direction of the display) perpendicular to the display 120.

According to one example, when the change amount $\triangle D_{\theta s}$ in the display angle of the display 120 on the first plane is identified, the processor 140 may add the current first angle of the display 120 on the first plane and the change amount $\triangle D_{\theta s}$ in the display angle of the display 120 on the first plane to identify the first target angle corresponding to the first plane. This will be described in detail with reference to FIG. 7B.

Referring to FIG. 7B, according to an embodiment, the processor 140 may identify the change amount in the display angle of the display 120 on the first plane using the change amount in the head angle (or first head angle) of the user on the first plane.

According to an embodiment, it is assumed that the head position of the user on the first plane has changed from a first position 71 to a second position 71-1. According to one example, the processor 140 may identify a first head facing vector 701 corresponding to the first position 71 based on the sensing data acquired from at least one sensor 110. Here, the head facing vector may be a vector obtained by calculating an outer product of a vector connecting positions of both shoulders of a user with a ground vector. In other words, the head facing vector may be a vector parallel to a gaze direction of a user. This will be described in detail with reference to FIG. 10A.

In addition, according to one example, when the user's head moves, the processor 140 may identify a second head facing vector 701-1 corresponding to the second position 71-1 based on the sensing data acquired from at least one sensor 110. According one example, the processor 140 may identify an angle between a first head facing vector 701 and a second head facing vector 701-1 as the change amount $\triangle H_{\theta s}$ of the head angle (or, the first head angle) of the user on the first plane, and may identify the change amount in the head angle of the user on the first plane as the change amount $\triangle D_{\theta s}$ of the display angle of the display 120 on the first plane.

Returning to FIG. 7A, according to an embodiment, the control method may identify a second target angle of the display 120 corresponding to the second plane based on the change amount in the second head angle corresponding to the second plane and a maximum movement angle of the display 120 on the second plane (S720). According to one example, the processor 140 may identify the second target angle of the display 120 using the following Equations 2 and 3.

[Equation 2]

$$-\theta_\tau < \triangle H_{\theta_r} < \theta_\tau : \triangle D_{\theta_r} = \theta_\tau$$

[Equation 3]

$$\triangle H_{\theta_r} > \theta_\tau \parallel \triangle H_{\theta_r} < -\theta_\tau : \triangle D_{\theta_r} = \triangle H_{\theta_r} - \theta_\tau$$

Here, $\theta_\tau$ refers to the angle (or maximum movement angle) at which the display 120 may move to the maximum extent on the second plane while the mobile robot 100 does not move. $\triangle H_{\theta T}$ refers to the change amount in the head angle ($H_{\theta T}$, or second head angle) of the user on the second plane. $D_{\theta T}$ refers to the display angle (or second angle) of the display 120 on the second plane, and $\triangle D_{\theta T}$ refers to the change amount in the display angle of the display 120 on the second plane. When the change amount $\triangle D_{\theta T}$ in the display angle of the display 120 on the second plane is identified, the processor 140 may identify the second target angle corresponding to the second plane by adding the current second angle of the display 120 on the second plane and the change amount $\triangle D_{\theta T}$ in the display angle of the display 120 on the second plane. This will be described in detail below with reference to FIG. 7C.

Referring to FIG. 7C, according to an embodiment, first, the processor 140 may identify a head facing vector 702 corresponding to the current gaze direction of the user and a head facing vector 702-1 corresponding to the changed gaze direction of the user based on the sensing data acquired from at least one sensor 110. Next, the processor 140 may identify an angle between the head facing vector 702 corresponding to the identified current gaze direction and the head facing vector 702-1 corresponding to the changed gaze direction of the user, and may identify the change amount $\triangle D_{\theta T}$ in the head angle of the user on the identified second plane. The processor 140 may identify the change amount $\triangle D_{\theta T}$ in the display angle of the display 120 on the second plane using the magnitude of the identified change amount $\triangle D_{\theta T}$ in the head angle of user and the above-described Equations 2 and 3.

Returning to FIG. 7A, according to an embodiment, the control method may identify a third target angle of the display corresponding to the third plane based on the change amount in the shoulder position of the user (S730).

[Equation 4]

$$\triangle D_{\theta_F} = \triangle S_{\theta_F}$$

Here, $D_{\theta F}$ refers to the display angle (or third angle) of the display 120 on the third plane, and $\triangle D_{\theta F}$ refers to the change amount in the display angle (or third angle) of the display 120 on the third plane. As illustrated in FIG. 4A, $S_{\theta F}$ refers to the angle formed by the straight line (or vector) connecting the first shoulder position 404 and the second shoulder position 406 on the third plane with respect to the ground. $\triangle S_{\theta F}$ refers to the angle formed by the straight line connecting the current first shoulder position 404 and second shoulder position 406 of the user on the third plane, and the straight line connecting the user's first shoulder position 404 and second shoulder position 406 on the third plane after the threshold time has elapsed. Accordingly, the change amount in the display angle (or third angle) of the display 120 on the third plane is identified based on the change amount in the first shoulder position 404 and the second shoulder position 406 of the user.

According to one example, when the change amount $\triangle D_{\theta F}$ in the display angle of the display 120 on the third plane is identified, the processor 140 may add the current third angle of the display 120 on the third plane and the change amount $\triangle D_{\theta F}$ in the display angle of the display 120 on the third plane to identify the third target angle corresponding to the third plane. This will be described in detail below.

According to an embodiment, the processor 140 may identify an angle formed by a straight line connecting the current first and second shoulder positions of the user on the third plane and a straight line connecting the first and second shoulder positions of the user on the third plane after the threshold time has elapsed, based on the sensing data acquired from at least one sensor 110. Next, according to an embodiment, the processor 140 may identify the identified angle as the change amount in the display angle (or third angle) of the display 120 on the third plane, and the processor 140 may add the current third angle of the display 120 on the third plane and the change amount $\triangle D_{\theta F}$ in the display angle of the display 120 on the third plane to identify the third target angle corresponding to the third plane.

According to an embodiment, the control method may control the driving unit to adjust the angle of the display 120 to the target angle of the display 120 based on the first target angle of the display 120, the second target angle of the display 120, and the third target angle of the display 120 (S740). According to one example, the processor 140 may control the driving unit 130 to adjust the angle of the display 120 on the first plane to the first target angle, to adjust the angle of the display 120 on the second plane to the second target angle, and to adjust the angle of the display 120 on the third plane to the third target angle.

FIGS. 8A to 8C are diagrams for describing a method for identifying a target position of a display according to an embodiment.

Referring to FIG. 8A, the control method according to an embodiment may identify the target position of the display 120 based on the head angle of the user, the head position of the user, the shoulder position of the user, the neck position of the user, the change amount in the head position of the user, the change amount in the shoulder position of the user, the change amount in the neck position of the user, the first target angle, the second target angle, and the third target angle (S810). According to an example, the processor 140 may identify the target position of the display 120 using the following Equations 5 to 8.

[Equation 5]

$$D' = D + A - B + C + \triangle H$$

Here, D' refers to a center point corresponding to the target position of the display 120, and D refers to the current center point of the display 120. A refers to the change amount in the target position of the display 120 on the first plane, and B refers to a correction value for reducing viewing fatigue of a user. C refers to the change amount in the target position of the display 120 on the second plane. $\triangle H$ refers to the change amount in the head position of the user. According to an example, the processor 140 may identify the change amount of the head position of the user based on the sensing data acquired from at least one sensor 110.

[Equation 6]

$$A = \overrightarrow{\overset{\sim}{n_H}} \cdot m(1 - \cos \triangle H_{\theta_s}) - \overrightarrow{\overset{\sim}{G}} \cdot (m \cdot \tan \triangle D_{\theta_s})$$

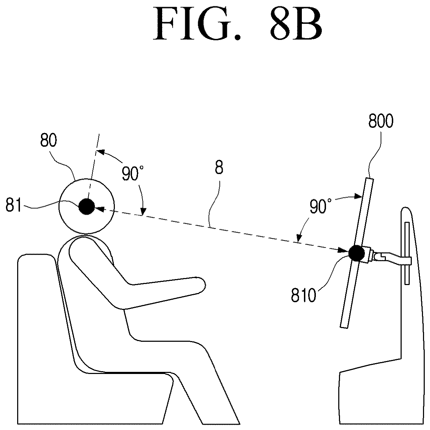

The above Equation 6 is an equation for calculating the change amount A in the target position of the display 120 on the first plane. $\overrightarrow{\overset{\sim}{n_H}}$ refers to the head facing vector of the user. m refers to the distance between the head position of the user and the center point of the display 120. The distance between the head position of the user and the center point of the display 120 will be described in detail with reference to FIG. 8B. $\triangle D_{\theta S}$ refers to the change amount in the head angle (or first head angle) of the user on the second plane. $\overrightarrow{\overset{\sim}{G}}$ refers to the ground vector, and $\triangle D_{\theta S}$ refers to the change amount in the display angle of the display 120 on the first plane. According to an example, the processor 140 may identify the change amount in the target position of the display 120 on the first plane using Equation 6.

Referring to FIG. 8B, according to an embodiment, the processor 140 may identify the information on the head position 81 of the user 80 based on the sensing data acquired from at least one sensor 110. The processor 140 may identify m, which is the distance 8 between the center point 810 of the display 800 and the head position of the user 81, based on the acquired sensing data. However, this is not limited thereto, and as an example, m, which is a distance 8 between the center point 810 of the display 800 and the head position of the user 81, may be pre-stored in the memory (not illustrated).

[Equation 7]

$$B = \overrightarrow{\overset{\sim}{NH}} \cdot (\frac{m}{2} \cos \triangle D_{\theta_s} \cdot \tan(a_1 - a_2))$$

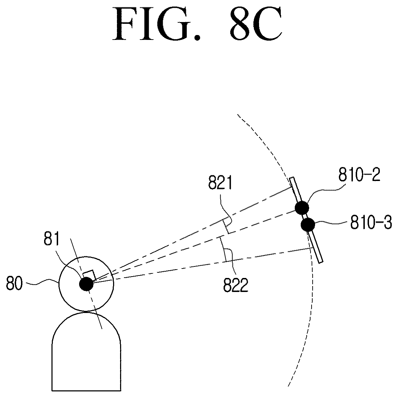

The above Equation 7 is an equation for calculating a correction value B for reducing the viewing fatigue of the user. Here, $\overrightarrow{\overset{\sim}{NH}}$ refers to a vector corresponding to the straight line connecting the neck position 405 and the head position 403 in FIG. 4A. m refers to the distance between the head position of the user and the center point of the display 120, and $\triangle D_{\theta S}$ refers to the change amount in the display angle of the display 120 on the first plane. Meanwhile, $\alpha_1$ refers to a human's relatively upper field of view calculated based on the human eye position, and $\alpha_2$ refers to a human's relatively lower field of view calculated based on the human eye position. This will be described in detail with reference to FIG. 8C.

According to an embodiment, the processor 140 may identify the target position of the display 120 using the correction value for reducing the viewing fatigue of the user. Here, the correction value for reducing the viewing fatigue of the user refers to a correction value that positions the display 120 at an ergonomically optimal height. According to an embodiment, the correction value for reducing the viewing fatigue of the user may be stored in the memory (not illustrated), which will be described in detail below with reference to FIG. 8C.

Referring to FIG. 8C, according to an embodiment, the processor 140 may identify the correction value B for reducing the viewing fatigue of the user based on a human eye position-based relatively upper viewing angle ($\alpha_1$, or 821) and a human eye position-based relatively lower viewing angle ($\alpha_2$, or 822). According to one example, the human relatively upper field of view 821 may be 25°, and the human relatively lower field of view 822 may be 35°, but is not limited thereto. In this case, according to the above Equation 7, a center point 810-3 corresponding to the target position of the display is positioned relatively lower than a contact point 810-2 between the straight line corresponding to the gaze direction of the user and the display.

[Equation 8]

$$A = \overset{\sim}{\overrightarrow{n_H}} \cdot m[1-\cos(\triangle H_{\theta_T}-\theta_\tau)] + \overset{\sim}{\overrightarrow{E_1 E_2}} \cdot l[1-\cos(\triangle H_{\theta_T}-\theta_\tau)]$$

The above Equation 8 is an equation for calculating a value corresponding to the change amount in the target position of the display 120 on the second plane. Here, $\overset{\sim}{\overrightarrow{n_H}}$ refers to the head facing vector of the user. m refers to the distance between the head position of the user and the center point of the display 120, and $\triangle H_{\theta T}$ refers to the change amount in the head angle (or first head angle) of the user on the second plane. $\theta_\tau$ refers to the angle (or maximum movement angle) at which the display may move the most on the second plane while the mobile robot 100 does not move.

$\overset{\sim}{\overrightarrow{E_1 E_2}}$ refers to a vector parallel to the straight line connecting the two eye vectors 401 and 402 in FIG. 4A, and 1 refers to a distance 7-1 between the head position of the user 71 on the second plane and the center point 720 of the display 700, as illustrated in FIG. 7.

As described above, the processor 140 may identify the target position of the display 120 using the following Equations 5 to 8.

Returning to FIG. 8A, according to an embodiment, the control method may control the driving unit 130 to adjust the position of the display 120 to the identified target position (S820).

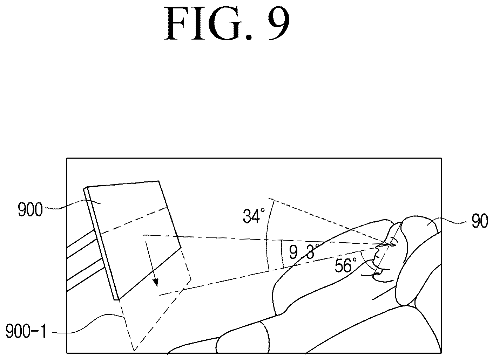

FIG. 9 is a diagram for describing the method for identifying a target position of a display according to an embodiment.

Referring to FIG. 9, according to an embodiment, the processor 140 may control the driving unit 130 to adjust the position of the display to a target position 900-1 based on a correction value for reducing viewing fatigue of a user 90. As the position of the display is adjusted based on the correction value for reducing viewing fatigue of the user 90, the center point corresponding to the target position 900-1 of the display is located relatively lower from the contact point between the display and the straight line corresponding to the gaze direction of the user. That is, the center point corresponding to the target position 900-1 of the display is positioned relatively lower than the target position 900 when comparing the position of the display without considering the above-described correction value. Accordingly, the display is positioned relatively lower than the existing position to reduce the viewing fatigue of the user.

FIGS. 10A and 10B are diagrams for describing a method for performing evasive movement of a mobile robot according to an embodiment.

Referring to FIG. 10A, according to an embodiment, the control method may identify whether the distance between the head position of the user and the display 120 is less than a preset value (S1010). According to an example, the processor 140 may identify the distance between the head position of the user and the display 120 based on the sensing data received from at least one sensor 110.

As illustrated in FIG. 10B, the processor 140 may identify the distance between a center point 1011 of the display 1010 within a mobile robot 1000 and a head position of a user 1001 based on the sensing data received from at least one sensor 110. When the distance between the center point 1011 of the display 1010 within the mobile robot 1000 and the head position of the user 1001 is identified, the processor 140 may identify whether the identified distance is less than a preset value. According to one example, the preset value may be 40 cm, but is not limited thereto.

Subsequently, according to an embodiment, when the distance between the head position of the user and the display 120 is less than the preset value (S1010: Y), the control method may identify whether a gaze time of a user on the display 120 is less than a preset time (S1020). Referring to FIG. 10B, according to an example, the processor 140 may acquire a head facing vector 1004 of a user based on the sensing data acquired from at least one sensor 110. Meanwhile, according to an example, the head facing vector may be a vector obtained by calculating an outer product of a vector connecting multiple shoulder positions 1002 and 1003 of the user and a ground vector. Here, the ground vector refers to a vector perpendicular to the ground.

According to an example, the processor 140 may identify whether the user is gazing at the display 120 based on direction information of the acquired head facing vector 1004 of the user. Based on this, the processor 140 may identify whether the user is gazing at the display 120 for less than a preset time.

However, the present disclosure is not limited thereto, and according to an example, when it is identified that the user does not gaze at the display 120, the processor 140 may identify whether the time that the user does not gaze at the display 120 is longer than or equal to a preset time.

Returning to FIG. 10A, according to an example, when the gaze time of the user on the display 120 is less than a preset time (S1020: Y), the control method may identify that the user has an intent to stand up and control the driving unit 130 to cause the mobile robot 100 to perform evasive movement based on the user's standing state (S1030). However, the present disclosure is not limited thereto, and according to an example, when the user does not gaze at the display 120 for a time longer than or equal to a preset time, the processor 140 may identify that the user has an intent to stand up and control the driving unit 130 to cause the mobile robot 100 to perform the evasive movement based on the user's standing state. Meanwhile, a specific method for perform evasive of a mobile robot 100 will be described in detail with reference to FIGS. 11A to 11D.

FIGS. 11A to 11D are diagrams illustrating a specific method for performing evasive movement of a mobile robot according to an embodiment.

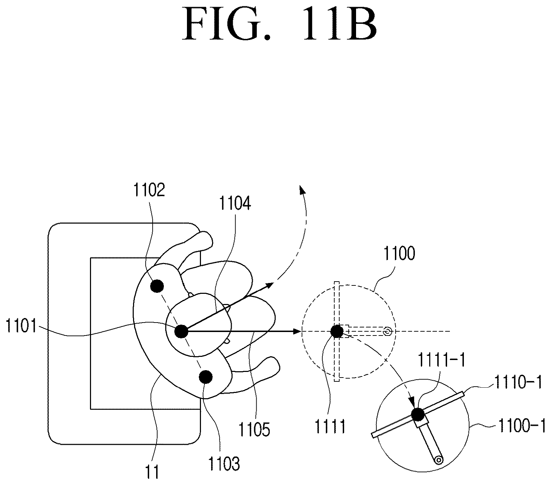

Referring to FIG. 11A, according to an embodiment, the control method may identify evasive movement position information of the mobile robot 100 based on shoulder position information of the user and current position information of the mobile robot 100 (S1110). This will be described in detail below with reference to FIG. 11B.

Referring to FIG. 11b, according to an embodiment, the processor 140 may identify information on an evasive movement position 1100-1 of the mobile robot based on information on the shoulder positions 1102 and 1103 of the user 11 and information on the current position 1100 of the mobile robot. The information on the current position 1100 of the mobile robot refers to the information on the position of the mobile robot before the user 11 stands up, when it is identified that a user 11 has intent to stand up.

Meanwhile, according to one example, the information on the location of the mobile robot may be coordinate information. According to one example, the coordinate information on the location of the mobile robot may be the location of the center point of a display included in the mobile robot. For example, the coordinate information corresponding to the current location 1100 of the mobile robot may be information on the coordinates of the center point 1111 of the display corresponding to the current location 1100. Alternatively, for example, the coordinate information corresponding to the evasion movement location 1100-1 of the mobile robot may be information on the coordinates of the center point 1111-1 of the display 1110-1 at the evasion movement location 1100-1. That is, the processor 140 may identify the information on the evasion movement location 1100-1 of the mobile robot by identifying the coordinate information on the center point of the display corresponding to the evasion movement location.

Meanwhile, according to one example, the processor 140 may identify the evasion movement location 1100-1 of the mobile robot using the following Equation 9.

$$[\text{Equation 9}]$$

$$R_B = S_3 + (\mu\cos\theta', \mu\sin\theta', 0)$$

Here, $R_B$ refers to the coordinate information corresponding to the evasion movement location 1100-1 of the mobile robot. $S_3$ refers to a vector point corresponding to the center point between the first shoulder position 1102 and the second shoulder position 1103 of the user 11. That is, the distance between $S_3$ and the first shoulder position 1102 is equal to the distance between $S_3$ and the second shoulder position 1103. Meanwhile, $\mu$ refers to the minimum distance that the mobile robot should stay away from the user 11 when the mobile robot performs the evasion movement. $\Theta'$ refers to the angle at which the mobile robot changes its direction for evasion, and is calculated based on the direction of the head facing vector 1104 when the user faces the mobile robot head-on.

Meanwhile, according to one example, the processor 140 may identify the angle at which the user 11 changes direction from the mobile robot using the following Equation 10, and may identify the identified angle as the angle at which the mobile robot changes its direction for evasion.

$$[\text{Equation 10}]$$

$$\theta' = \cos^{-1} \frac{\vec{n} \cdot \vec{S_3 \cdot R_A}}{\left|\vec{n}\right| \left|\vec{S_3 \cdot R_A}\right|}$$

Here, $\vec{n}$ is the head facing vector calculated based on the upper body of the user, which is a vector obtained by taking the outer product of the ground vector and the vector corresponding to the straight line connecting the first shoulder position 1102 and the second shoulder position 1103. $R_A$ refers to the coordinate value of the center point 1111 of the display corresponding to the current position 1100 of the mobile robot. $S_3$ refers to a vector point corresponding to the center point between the first shoulder position 1102 and the second shoulder position 1103 of the user 11. $|\vec{n}|$ is the magnitude of $\vec{n}$, and $|S_3 \vdots R_A|$ is the magnitude of $S_3 \vdots R_A$.

According to an embodiment, when the value of θ' is identified as exceeding 0, the processor 140 may identify that the user is moving to the left with respect to the mobile robot, as illustrated in FIG. 11B. In this case, according to one example, the processor 140 may control the driving unit 130 so that the mobile robot moves in a direction opposite to the direction in which the user is moving. For example, the processor 140 may control the driving unit 130 so that the evasion movement position 1111-1 of the mobile robot is located in an area opposite to the user's position from the original position 1111.

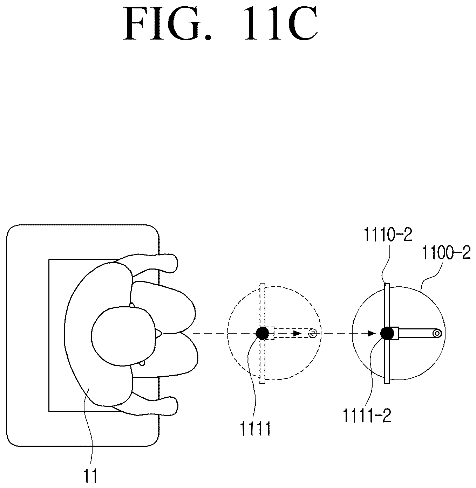

Alternatively, according to an embodiment, when the value of θ' is identified as 0, the processor 140 may identify that the user is standing up from a sitting or lying position. In this case, the evasion movement position 1111-2 of the mobile robot may be located in an area opposite to the user's position from the original position 1111. Accordingly, as illustrated in FIG. 11C, the mobile robot may move 1100-2 in a direction opposite to the user's position.

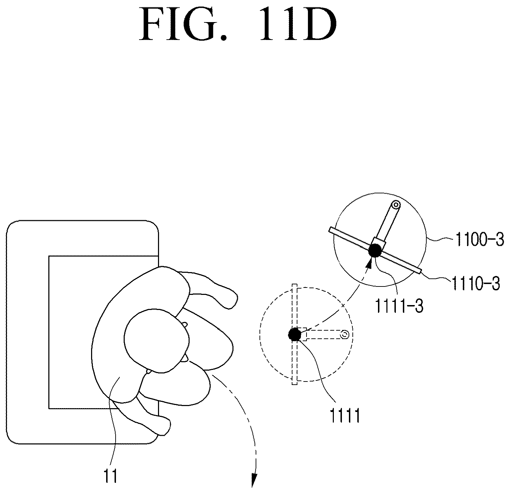

According to an embodiment, when it is identified that the value of θ' is less than 0, the processor 140 may identify that the user is moving to the right relative to the mobile robot, as illustrated in FIG. 11D. In this case, according to one example, the processor 140 may control the driving unit 130 so that the mobile robot moves in a direction opposite to the direction in which the user is moving. For example, the processor 140 may control the driving unit 130 so that the evasion movement position 1111-3 of the mobile robot is located in an area opposite to the user's position from the original position 1111.

Meanwhile, returning to FIG. 11A, according to an embodiment, the control method may control the driving unit 130 to cause the mobile robot 100 to perform the evasive movement based on the evasion movement position information of the mobile robot 100 (S1120).

According to an embodiment, the processor 140 may identify movement path information of the mobile robot 100 based on the shoulder position information of the user, the current position information of the mobile robot 100, and the evasion movement position information of the mobile robot 100, and control the driving unit 130 to cause the mobile robot 100 to perform the evasive movement based on the identified movement path information. Here, the movement path information of the mobile robot 100 refers to the information on the movement path for the mobile robot 100 to move from the current position to the evasion movement position. According to one example, the processor 140 may identify the movement path information of the mobile robot 100 through the following Equation 11.

[Equation 11]

$$f(t) = (1-t)[(1-t) \cdot R_A + t \cdot \overrightarrow{S_2 S_1}] + t[(1-t)\overrightarrow{S_2 S_1} + t \cdot R_B], 0 \le t \le 1$$

Here, t refers to a weight, and $f(t)$ is a function corresponding to the movement path of the mobile robot 100. $R_A$ refers to the coordinate value of the center point of the display 120 corresponding to the current position of the mobile robot 100. $\overrightarrow{S_2 S_1}$ is a vector corresponding to the straight line connecting both shoulders 1102 and 1103 of the user 11, as illustrated in FIG. 11B. $R_B$ refers to the coordinate information corresponding to the evasive movement position 1100-1 of the mobile robot, which may be calculated using the above Equation 9. The processor 140 identifies the movement path information of the mobile robot 100 using the Equation 11 described above, and controls the driving unit 130 to cause the mobile robot 100 to perform the evasive movement based on the identified movement path information.

Meanwhile, according to one example, the movement speed of the mobile robot 100 may be the speed at which the user brings the head closer to the display 120. According to one example, the processor 140 may identify the speed at which the user brings the head closer to the display 120 based on the sensing data acquired from at least one sensor, and may identify the identified speed as the movement speed for evasion of the mobile robot 100.

FIGS. 12A to 12D are diagrams illustrating a method for recognizing a user's touch intent according to an embodiment.

According to an embodiment, the mobile robot 100 may identify the touch intent information of the user and control the driving unit 130 based on the information to adjust the position of the display 120. Here, the touch intent information of the user is information on whether the user has an intent to touch the display 120 included in the mobile robot 100. The processor 140 may identify the user's touch intent based on the sensing data acquired from at least one sensor 110 and control the driving unit 130 to adjust the position of the display 120 based on the identified intent.

Referring to FIG. 12A, according to an embodiment, the control method may identify whether the user gazes at the display 120 for a preset time or longer based on the sensing data (S1210). According to one example, the processor 140 may identify whether the user gazes at the display 120 based on the sensing data acquired from at least one sensor 110. When it is identified that the user gazes at the display 120, the processor 140 may identify whether the user gazes at the display 120 for a preset time or longer from the identified time.

Next, according to an embodiment, when the user gazes at the display 120 for a preset time or longer (S1210: Y), the control method may identify whether the distance between the display 120 and the finger decreases over time based on the finger position information of the user identified based on the sensing data (S1220). Here, the finger position information is information on a position of a user's finger performing an operation to touch the display 120.

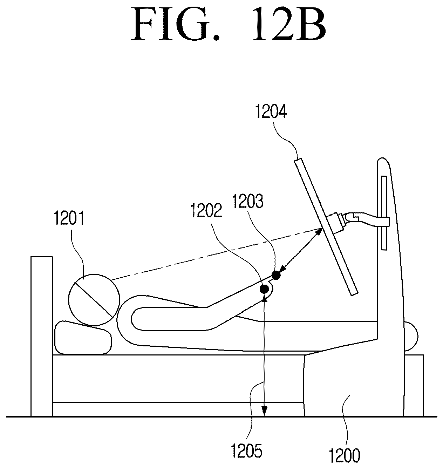

Referring to FIG. 12B, according to an embodiment, the processor 140 may identify position information of a user's finger 1203 based on the sensing data acquired from at least one sensor 110. Next, according to an embodiment, the processor 140 may identify the distance between a display 1204 and the finger 1203 based on the identified position information of the user's finger 1203. Here, the distance between the display 1204 and the finger 1203 may be the distance between the center point of the display 1204 and the finger 1203.

Returning to FIG. 12A, according to an embodiment, when the distance between the display 120 and the finger decreases over time (S1220: Y), the control method may identify whether a height of a wrist increases over time based on wrist height information of a user identified based on the sensing data (S1230). Here, wrist height information of the user refers to information on the height of the wrist relative to the ground.

Referring to FIG. 12B, according to an embodiment, the processor 140 may identify height information 1205 of a user's wrist 1202 identified based on the sensing data acquired from at least one sensor 110. The processor 140 may identify whether the height of the wrist 1202 increases over time based on the identified wrist height information 1205.

Returning to FIG. 12A, according to an embodiment, when the height of the wrist increases over time (S1230: Y), the control method may identify whether user's finger gesture information identified based on the sensing data corresponds to any one of a plurality of pieces of reference image information corresponding to the touch gesture of the user (S1240).

Here, the user's finger gesture information refers to image information regarding a gesture made by multiple fingers included in a user's hand. The reference image information corresponding to the user's touch gesture is sample image information for identifying the user's touch gesture. Alternatively, according to one example, the plurality of pieces of reference image information corresponding to the user's touch gesture may be stored in the memory (not illustrated).

Alternatively, the processor 140 may also be acquired based on the sensing data acquired from at least one sensor 110. For example, upon receiving a user input for receiving the user's touch gesture information, the processor 140 may identify the user's finger gesture information received through at least one sensor 110 as reference image information corresponding to the user's touch gesture. Alternatively, the processor 140 may acquire reference image information corresponding to the user's touch gesture through a trained neural network model.

Next, according to an embodiment, the control method may control the driving unit 130 to adjust the position of the display 120 when the user's finger gesture information corresponds to any one of the plurality of pieces of reference image information corresponding to the user's touch gesture (S1240: Y) (S1250). According to one example, when it is identified that the user's finger gesture information corresponds to any one of the plurality of pieces of reference image information corresponding to the user's touch gesture, the processor 140 may control the driving unit 130 to adjust the position of the display 120 to be within a preset distance from the user's finger.

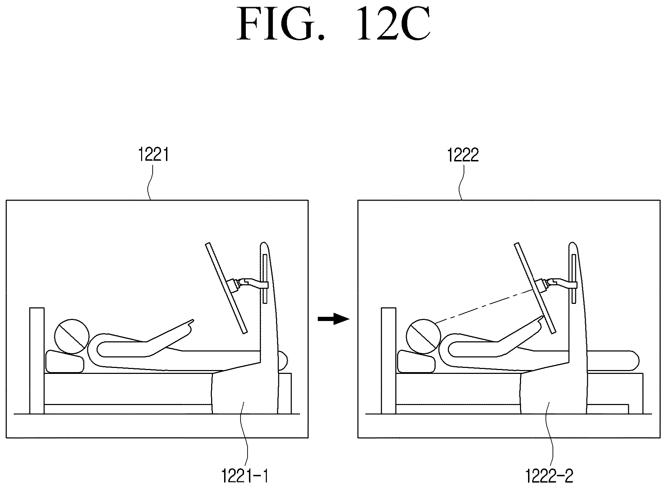

Referring to FIG. 12C, according to an embodiment, the processor 140 may acquire the user's finger gesture information based on the sensing data acquired from at least one sensor 110, and may identify whether the user's finger gesture information corresponds to any one of the plurality of pieces of reference image information corresponding to the user's touch gesture based on the information stored in the memory (not illustrated). When it is identified that the user's finger gesture information corresponds to any one of the plurality of pieces of reference image information corresponding to the user's touch gesture, the processor 140 may control the driving unit 130 to reduce the distance between the mobile robot and the user.

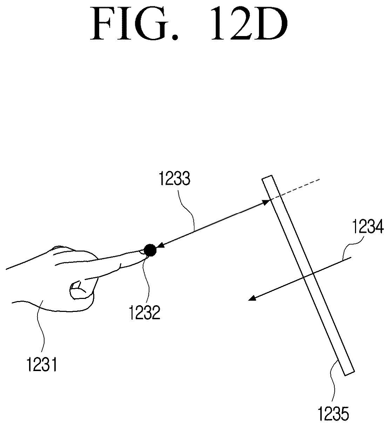

According to one example, when the user's finger gesture information corresponds to any one of the plurality of pieces of reference image information corresponding to the user's touch gesture while the user and a mobile robot 1221-1 are at a distance from each other, as in the left drawing 1221 of FIG. 12C, the processor 140 may control the driving unit 130 to reduce the distance between the user and a mobile robot 1222-2, as in the right drawing 1222 of FIG. 12C. A specific method for controlling the driving unit 130 to reduce the distance between the user and the mobile robot will be described in detail below with reference to FIG. 12D.

Referring to FIG. 12D, according to an embodiment, the processor 140 may control the driving unit 130 so that a distance 1233 between a display 1235 and the finger becomes a preset distance based on finger position information of a user 1231. The processor 140 may obtain the finger position information of the user 1231 based on the sensing data acquired from at least one sensor 110. Meanwhile, according to one example, the processor 140 may identify the linear distance between the end point 1232 of one of the fingers of the user 1231 that has the smallest distance from the display 1235 and the display 1235 as the distance 1233 between the display 1235 and the finger based on the obtained finger position information. In this case, the linear distance described above means a linear distance on a first plane, that is, a linear distance on a sagittal plane. In addition, a linear distance between any one end point 1232 and the display 1235 refers to a linear distance in a direction parallel to the direction vector 1234 that is perpendicular to the display 1235.

According to one example, the processor 140 may control the driving unit 130 so that the linear distance between any one end point 1232 of the user's 1231 finger, which has the shortest distance from the display 1235, and the display 1235 becomes a preset distance (e.g., 60 cm). However, this is not limited thereto, and according to one example, the preset distance may have a value between 50 cm and 70 cm.

FIGS. 13A to 13C are diagrams illustrating the method for recognizing a user's touch intent according to an embodiment.

Referring to FIG. 13A, according to an embodiment, the control method may first identify whether the user's touch input is terminated based on the user's finger position information (S1310). According to one example, the processor 140 may acquire the user's finger position information based on the sensing data acquired from at least one sensor 110. When the processor 140 identifies that the user's wrist height is decreasing based on the acquired finger position information and that the user's finger position does not change for a preset time, the processor 140 may identify that the user's touch input is terminated.

Alternatively, according to one example, the memory (not illustrated) may store reference image information corresponding to the termination of the user's touch input, and the processor 140 may identify whether the user's touch input is terminated based on whether the user's finger gesture information corresponds to any one of the plurality of pieces of reference image information corresponding to the termination of the user's touch input. Here, the plurality of pieces of reference image information corresponding to the termination of the user's touch input is sample image information for identifying the user's intent to terminate the touch input.

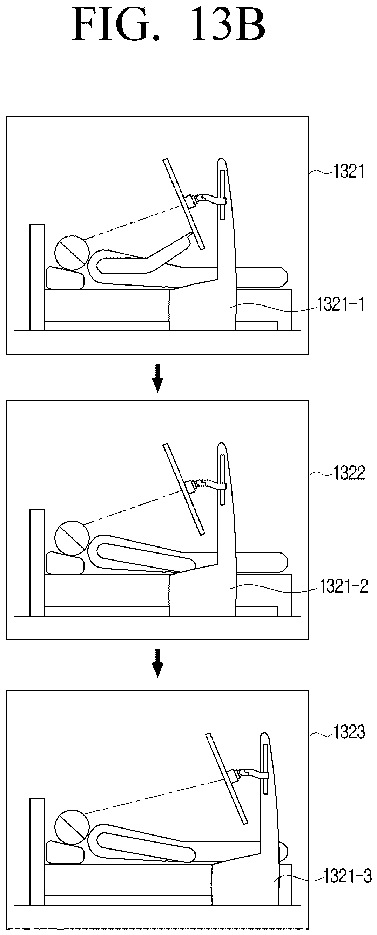

As illustrated in the left drawing 1321 of FIG. 13B, according to an embodiment, assume that a distance between a user and a mobile robot 1321-1 is close and thus the user performs a touch input on the display.

According to an embodiment, the processor 140 may identify whether the user's touch input is terminated based on the user's finger position information. As illustrated in the central drawing 1322 of FIG. 13B, when the processor 140 identifies that the user's wrist height has decreased based on the acquired finger position information and that the user's finger position has not changed for a preset time, the processor may identify that the user's touch input is terminated.

Subsequently, according to an embodiment, when the user's touch input is terminated (S1310: Y), the control method may control the driving unit to return the mobile robot to the user's original viewing position based on the user's shoulder position information (S1320).

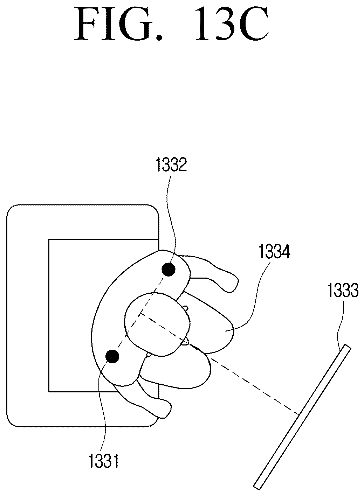

According to an example, as illustrated in the right drawing 1323 of FIG. 13B, when the user's touch input is terminated, the processor 140 may control the driving unit 130 to return the mobile robot 1321-3 to the user's original viewing position based on the user's shoulder position information. According to an example, the processor 140 may acquire the user's shoulder position information based on the sensing data obtained through at least one sensor 110. A specific method for controlling the driving unit 130 to return the user's original viewing position will be described in detail with reference to FIG. 13C below.

Referring to FIG. 13C, according to an embodiment, when a user's 1334 touch input is terminated, the processor 140 may control the driving unit 130 to return the mobile robot 1333 to the user's 1334 original viewing position based on the user's 1334 shoulder position information. Here, the existing user's 1334 viewing position refers to the position of the mobile robot 1333 at the time the user's touch intent is identified. According to an example, the memory (not illustrated) may store information on the position of the mobile robot 1333 at the time the user's touch intent is identified. The processor 140 may control the driving unit 130 to move the mobile robot 1333 to the existing viewing position based on the information stored in the memory (not illustrated).

In this case, for example, the processor 140 may acquire the movement path information that allows the mobile robot 1333 to return to the user's 1334 existing viewing position based on the shoulder position information, and control the driving unit 130 based on the acquired movement path information. For example, the processor 140 may obtain location information for each of the plurality of shoulder positions 1331 and 1332 of the user based on the sensing data acquired from at least one sensor 110. Next, the processor 140 may control the driving unit 130 to move in the direction parallel to the direction of a vector obtained by taking the outer product of a vector corresponding to a straight line connecting the first shoulder position 1331 and the second shoulder position 1332 among the plurality of shoulder positions and a ground vector perpendicular to the ground. Here, the vector obtained by taking an outer product of a vector corresponding to the straight line connecting the first shoulder position 1331 and the second shoulder position 1332 among the plurality of shoulder positions and the ground vector perpendicular to the ground is a vector parallel to the head facing vector of the user. That is, the mobile robot 1333 may move in the same direction as the user's 1331 moving direction. Alternatively, the mobile robot 1333 may move in the same direction as the gaze direction of the user.

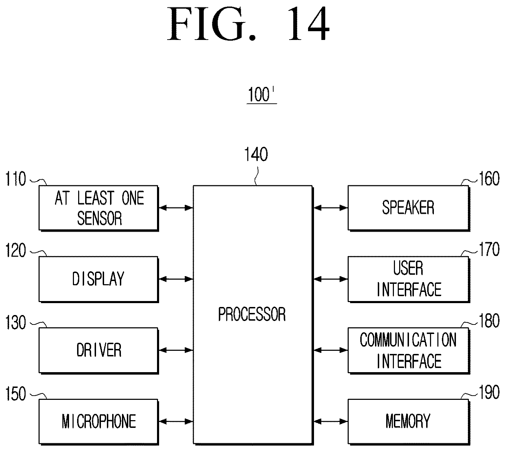

FIG. 14 is a block diagram illustrating a detailed configuration of the mobile robot according to an embodiment.

Referring to FIG. 14, a mobile robot 100' may include at least one sensor 110, the display 120, the driving unit 130, one or more processors 140, the microphone 150, a speaker 160, a user interface 170, a communication interface 180, and a memory 190. A detailed description for components overlapped with components illustrated in FIG. 2 among components illustrated in FIG. 14 will be omitted.

The microphone 150 may refer to a module that acquires sound and converts the acquired sound into an electrical signal, and may be a condenser microphone, a ribbon microphone, a moving coil microphone, a piezoelectric element microphone, a carbon microphone, or a micro electro mechanical system (MEMS) microphone. In addition, the microphone 170 may be implemented in non-directional, bi-directional, unidirectional, sub cardioid, super cardioid, and hyper cardioid methods.

The speaker 160 may include a tweeter for high-pitched sound reproduction, a mid-range sound for mid-range sound reproduction, a woofer for low-pitched sound reproduction, a subwoofer for extremely low-pitched sound reproduction, an enclosure for controlling resonance, a crossover network that divides an electric signal frequency input to the speaker by band, etc.

The speaker 160 may output an acoustic signal to the outside of the mobile robot 100'. The speaker 160 may output multimedia reproduction, recording reproduction, various kinds of notification sounds, voice messages, and the like. The mobile robot 100' may include an audio output device such as the speaker 160, or may include an output device such as the audio output terminal. In particular, the speaker 160 may provide acquired information, information processed/produced based on the acquired information, a response result to a user's voice, an operation result, or the like in the form of voice.

The user interface 170 is a component for the mobile robot 100' to perform an interaction with a user. For example, the user interface 180 may include at least one of a touch sensor, a motion sensor, a button, a jog dial, a switch, a microphone, or a speaker, but is not limited thereto.

The communication interface 180 may input and output various types of data. For example, the communication interface 180 may transmit and receive various types of data to and from an external device (e.g., source device), an external storage medium (e.g., USB memory), an external server (e.g., web hard), etc., through communication methods such as AP-based Wi-Fi (wireless LAN network), Bluetooth, Zigbee, a wired/wireless local area network (LAN), a wide area network (WAN), Ethernet, IEEE 1394, a high-definition multimedia interface (HDMI), a universal serial bus (UBS), a mobile high-definition link (MHL), an audio engineering society/European broadcasting union (AES/EBU), optical, and coaxial

According to one example, the communication interface 180 may include a Bluetooth low energy (BLE) module. The BLE refers to Bluetooth technology that enables low-power, low-capacity data transmission and reception in the 2.4 GHz frequency band with a range of approximately 10 meters.

However, the present disclosure is not limited thereto, and the communication interface 180 may also include a Wi-Fi communication module. That is, the communication interface 180 may include at least one of the Bluetooth low energy (BLE) module and the Wi-Fi communication module.

The memory 190 may store data necessary for various embodiments. Depending on the data storage purpose, the memory 190 may be implemented as the memory 190 embedded in the mobile robot 100' or as the memory 190 detachably attached to the mobile robot 100'. For example, data for driving the mobile robot 100' may be stored in the memory 190 embedded in the mobile robot 100', and data for expanding the functions of the mobile robot 100' may be stored in the memory 190 that may be attached or detached to the mobile robot 100'.

Meanwhile, the memory 190 embedded in the mobile robot 100' may include at least one of, for example, a volatile memory 190 (for example, a dynamic random access memory (DRAM), a static RAM (SRAM), a synchronous dynamic RAM (SDRAM), or the like), a non-volatile memory 190 (for example, a one time programmable read only memory (OTPROM), a programmable ROM (PROM), an erasable and programmable ROM (EPROM), an electrically erasable and programmable ROM (EEPROM), a mask ROM, a flash ROM, or the like), a flash memory 190 (for example, a NAND flash, a NOR flash, or the like), a hard drive, and a solid state drive (SSD)). In addition, the memory 190 detachable from the mobile robot 100' may be implemented in the form of the memory 190 card (e.g., compact flash (CF), secure digital (SD), micro secure digital (Micro-SD), mini secure digital (Mini-SD), extreme digital (xD), multi-media card (MMC), etc.), external memory 190 (e.g., USB memory) connectable to a USB port, and the like.

According to an embodiment, the memory 190 may store a trained neural network model and control information corresponding to each of a plurality of walking steps.

The mobile robot 100' according to an embodiment of the present disclosure may include a plurality of artificial intelligence models (or artificial neural network models or training network models) composed of at least one neural network layer. The artificial neural network may a include deep neural network (DNN), and examples of the artificial neural network may includes a convolutional neural network (CNN), a recurrent neural network (RNN), a restricted Boltzmann machine (RBM), a deep belief network (DBN), a bidirectional recurrent deep neural network (BRDNN), a deep Q-Network, and the like, but the artificial neural network are not limited to the above examples.

According to the above-described example, the mobile robot 100' may position the display 120 in a position that minimizes physical fatigue by considering the change in the user's posture. Accordingly, the user may watch a video while minimizing fatigue, thereby improving user satisfaction. In addition, the mobile robot 100' may identify the user's intent to stop viewing the display 120 (or to stop using the mobile robot 100') and adjust the position of the display 120 or the mobile robot 100' based on the user's intent.

Alternatively, according to the example described above, the mobile robot 100' may identify the user's intent to touch and adjust the position of the display 120 or the mobile robot 100' based on the user's intent. Accordingly, the user satisfaction may be improved.

Meanwhile, the above-described methods according to various embodiments of the present disclosure may be implemented in a form of application that can be installed in the existing mobile robot. Alternatively, the above-described methods according to various embodiments of the present disclosure may be performed using a deep learning-based learned neural network (or deep learned neural network), that is, a learning network model. In addition, the above-described methods according to various embodiments of the present disclosure may be implemented only by software upgrade or hardware upgrade of the existing mobile robot. In addition, various embodiments of the present disclosure described above can be performed through an embedded server provided in the mobile robot or a server outside the mobile robot.

Meanwhile, according to an embodiment of the disclosure, various embodiments described above may be implemented by software including instructions stored in a machine-readable storage medium (for example, a computer-readable storage medium). A machine may be an apparatus that invokes the stored instruction from the storage medium and may be operated depending on the invoked instruction, and may include the display apparatus (for example, the display apparatus A) according to the disclosed embodiments. In the case in which a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to an embodiment, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

In addition, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although exemplary embodiments of the present disclosure have been illustrated and described hereinabove, the present disclosure is not limited to the abovementioned specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

**Claims**

1. A mobile robot, comprising:

at least one sensor;
a display configured to adjust an angle;
a driving unit; and
one or more processors configured to identify a posture change amount of a user for a threshold time based on sensing data acquired from the at least one sensor,
identify that position adjustment of the display is necessary when it is identified that the identified posture change amount is less than a threshold change amount,
identify a target position of the display and a target angle of the display when it is identified that the position adjustment of the display is necessary, and
control the driving unit based on the target position of the display and the target angle of the display.

2. The mobile robot as claimed in claim 1, wherein the one or more processors are configured to identify whether a change amount in a head position of the user, a change amount in a shoulder position of the user, and a change amount in a neck position of the user for the threshold time are each less than the threshold change amount when a change amount in a head angle of the user acquired based on the sensing data is greater than or equal to a threshold value, and

identify that the position adjustment of the display is necessary when it is identified that the change amount in the head angle of the user is less than the threshold change amount.

3. The mobile robot as claimed in claim 2, wherein the one or more processors are configured to acquire gaze information of the user on the display based on the sensing data, and

identify whether the change amount in the head angle of the user acquired based on the sensing data is greater than or equal to the threshold value when it is identified that the user gazes at the display based on the gaze information of the user.

4. The mobile robot as claimed in claim 2, wherein the head angle of the user includes a first head angle corresponding to a first plane, a second head angle corresponding to a second plane, and a third head angle corresponding to a third plane, and

the one or more processors are configured to identify whether the change amount in the head position of the user, the change amount in the shoulder position of the user, and the change amount in the neck position of the user are each less than the threshold change amount for the threshold time when a first head angle change amount corresponding to the first plane is greater than or equal to a first threshold value,

identify whether a second head angle change amount corresponding to the second plane is greater than or equal to a second threshold value when the first head angle change amount is less than the first threshold value,

identify whether the change amount in the head position of the user, the change amount in the shoulder position of the user, and the change amount in the neck position of the user are each less than the threshold change amount for the threshold time when it is identified that the second head angle change amount is greater than or equal to the second threshold value,

identify whether a third head angle change amount corresponding to the third plane is greater than or equal to a third threshold value when the second head angle change amount is less than the second threshold value, and

identify whether the change amount in the head position of the user, the change amount in the shoulder position of the user, and the change amount in the neck position of the user are each less than the threshold change amount for the threshold time when it is identified that the third head angle change amount is greater than or equal to the third threshold value.

5. The mobile robot as claimed in claim 2, wherein the head angle of the user includes a first head angle corresponding to a first plane, a second head angle corresponding to a second plane, and a third head angle corresponding to a third plane, and

the one or more processors are configured to identify a first target angle of the display corresponding to the first plane based on a first head angle change amount corresponding to the first plane,

identify a second target angle of the display corresponding to the second plane based on a second head angle change amount corresponding to the second plane and a maximum movement angle of the display in the second plane,

identify a third target angle of the display corresponding to the third plane based on the change amount in the shoulder position of the user, and

control the driving unit to adjust an angle of the display to the target angle of the display based on a first target angle of the display, a second target angle of the display, and a third target angle of the display.

6. The mobile robot as claimed in claim 5, wherein the one or more processors are configured to identify a target position of the display based on the head angle of the user, the head position of the user, the shoulder position of the user, the neck position of the user, the change amount in the head position of the user, the change amount in the shoulder position of the user, the change amount in the neck position of the user, the first target angle, the second target angle, and the third target angle, and

control the driving unit to adjust the position of the display to the identified target position.

7. The mobile robot as claimed in claim 6, wherein the one or more processors are configured to control the driving unit to adjust the position of the display to the target position based on the head angle of the user, the head position of the user, the shoulder position of the user, the neck position of the user, the change amount in the head position of the user, the change amount in the shoulder position of the user, the change amount in the neck position of the user, the first target angle, the second target angle, the third target angle, and a correction value for reducing a viewing fatigue of the user.

8. The mobile robot as claimed in claim 1, wherein the one or more processors are configured to identify whether a gaze time of the user on the display is less than a preset time when a distance between the head position of the user and the display is less than a preset value, and
identify that the user has intent to stand when it is identified that a gaze time of the user is less than the preset time and control the driving unit to perform evasive movement of the mobile robot evasively based on a standing state of the user.

9. The mobile robot as claimed in claim 8, wherein the one or more processors are configured to identify evasive movement position information of the mobile robot based on shoulder position information of the user and current position information of the mobile robot, and
control the driving unit to move the mobile robot evasively based on the evasive movement position information of the mobile robot.

10. The mobile robot as claimed in claim 9, wherein the one or more processors are configured to identify movement path information of the mobile robot based on the shoulder position information of the user, the current position information of the mobile robot, and the evasive movement position information of the mobile robot, and
control the driving unit to move the mobile robot evasively based on the identified movement path information.

11. The mobile robot as claimed in claim 1, further comprising:

a memory configured to store a plurality of pieces of reference image information corresponding to a touch gesture of the user,
wherein the one or more processors are configured to identify whether the user gazes at the display for a preset time or longer based on the sensing data,
identify whether a distance between the display and a finger decreases over time based on finger position information of the user identified based on the sensing data when it is determined that the user gazes at the display for the preset time or longer,
identify whether a height of a wrist increases over time based on wrist height information of the user identified based on the sensing data when the distance between the display and the finger decreases over time,
identify whether finger gesture information of the user identified based on the sensing data corresponds to any one of the plurality of pieces of reference image information when the height of the wrist increases over time, and
control the driving unit to adjust the position of the display when the finger gesture information of the user corresponds to any one of the plurality of pieces of reference image information.

12. The mobile robot as claimed in claim 11, wherein the one or more processors are configured to control the driving unit to the distance between the display and the finger to be a preset distance based on the finger position information of the user, and
the distance between the display and the finger is a straight line distance on a first plane between an end point of any one of the fingers of the user that is closest to the display and the display.

13. The mobile robot as claimed in claim 12, wherein the one or more processors are configured to identify whether a touch input of the user ends based on the finger position information of the user, and
control the driving unit to return the mobile robot to a previous viewing position of the user based on the shoulder position information of the user when it is identified that the shoulder position of the user ends.

14. A control method for a mobile robot, comprising:

identifying a posture change amount of a user for a threshold time based on sensing data acquired from at least one sensor;
identifying that position adjustment of the display whose angle is adjustable is necessary when it is identified that the identified posture change amount is less than a threshold change amount;
identifying a target position of the display and a target angle of the display when it is identified that the position adjustment of the display is necessary; and
controlling the driving unit based on the target position of the display and the target angle of the display.

15. A non-transitory computer-readable recording medium storing computer instructions that cause a mobile robot to perform an operation when executed by a processor of the mobile robot, wherein the operation includes:

identifying a posture change amount of a user for a threshold time based on sensing data acquired from the at least one sensor;
identifying that position adjustment of the display whose angle is adjustable is necessary when it is identified that the identified posture change amount is less than a threshold change amount;
identifying a target position of the display and a target angle of the display when it is identified that the position adjustment of the display is necessary; and
controlling the driving unit based on the target position of the display and the target angle of the display.

# FIG. 1

# FIG. 2

<u>100</u>

110

AT LEAST ONE
SENSOR

140

PROCESSOR

130

DRIVER

120

DISPLAY

# FIG. 3

START

IDENTIFY POSTURE CHANGE AMOUNT OF USER FOR THRESHOLD TIME BASED ON SENSING DATA ACQUIRED FROM AT LEAST ONE SENSOR ～S310

WHEN IT IS IDENTIFIED THAT IDENTIFIED POSTURE CHANGE AMOUNT IS LESS THAN THRESHOLD CHANGE AMOUNT, IDENTIFY THAT POSITION ADJUSTMENT OF ANGLE-ADJUSTABLE DISPLAY IS NECESSARY ～S320

WHEN IT IS IDENTIFIED THAT POSITION ADJUSTMENT OF DISPLAY IS NECESSARY, IDENTIFY TARGET POSITION INFORMATION OF DISPLAY AND TARGET ANGLE OF DISPLAY ～S330

CONTROL DRIVER BASED ON TARGET POSITION INFORMATION OF DISPLAY AND TARGET ANGLE OF DISPLAY ～S340

END

# FIG. 4A

# FIG. 4B

# FIG. 4C

# FIG. 4D

# FIG. 4E

# FIG. 4F

# FIG. 4G

# FIG. 5

START

S510 — IS CHANGE AMOUNT IN HEAD ANGLE OF USER ACQUIRED BASED ON SENSING DATA GREATER THAN OR EQUAL TO THRESHOLD VALUE?

N

Y

S520 — IDENTIFY WHETHER CHANGE AMOUNT IN HEAD POSITION OF USER, CHANGE AMOUNT IN SHOULDER POSITION OF USER, AND CHANGE AMOUNT IN NECK POSITION OF USER FOR THRESHOLD TIME ARE EACH LESS THAN THRESHOLD CHANGE AMOUNT

S530 — ARE CHANGE AMOUNT IN HEADER POSITION OF USER, CHANGE AMOUNT IN SHOULDER POSITION OF USER, AND CHANGE AMOUNT IN NECK POSITION OF USER FOR THRESHOLD TIME EACH LESS THAN THRESHOLD CHANGE AMOUNT?

N

Y

S540 — IDENTIFY THAT POSITION ADJUSTMENT OF DISPLAY IS NECESSARY

END

# FIG. 6

START

S610

IS FIRST
HEAD ANGLE CHANGE AMOUNT
CORRESPONDING TO FIRST PLANE GREATER
THAN OR EQUAL TO FIRST
THRESHOLD VALUE?

N

S620

IS SECOND
HEAD ANGLE CHANGE AMOUNT
CORRESPONDING TO SECOND PLANE
GREATER THAN OR EQUAL TO SECOND
THRESHOLD VALUE?

Y

Y

N

S630

IS THIRD
HEAD ANGLE CHANGE AMOUNT
CORRESPONDING TO THIRD PLANE
GREATER THAN OR EQUAL TO THIRD
THRESHOLD VALUE?

Y

N

S640

IDENTIFY WHETHER CHANGE AMOUNT IN HEADER
POSITION OF USER, CHANGE AMOUNT IN SHOULDER
POSITION OF USER, AND CHANGE AMOUNT IN NECK
POSITION OF USER FOR THRESHOLD TIME ARE EACH
LESS THAN THRESHOLD CHANGE AMOUNT

END

# FIG. 7A

START

IDENTIFY FIRST TARGET ANGLE OF DISPLAY CORRESPONDING
TO FIRST PLANE BASED ON CHANGE AMOUNT IN FIRST HEAD
ANGLE CORRESPONDING TO FIRST PLANE — S710

IDENTIFY SECOND TARGET ANGLE OF DISPLAY CORRESPONDING
TO SECOND PLANE BASED ON CHANGE AMOUNT IN SECOND HEAD
ANGLE CORRESPONDING TO SECOND PLANE AND MAXIMUM
MOVEMENT ANGLE OF DISPLAY ON SECOND PLANE — S720

IDENTIFY THIRD TARGET ANGLE OF DISPLAY CORRESPONDING
TO THIRD PLANE BASED ON CHANGE AMOUNT IN SHOULDER
POSITION OF USER — S730

CONTROL DRIVER TO ADJUST ANGLE OF DISPLAY TO
TARGET ANGLE OF DISPLAY BASED ON FIRST TARGET ANGLE
OF DISPLAY, SECOND TARGET ANGLE OF DISPLAY, AND THIRD
TARGET ANGLE OF DISPLAY — S740

END

# FIG. 7B

# FIG. 7C

# FIG. 8A

```
          ┌─────────────┐
          │    START    │
          └──────┬──────┘
                 │
                 ▼
┌────────────────────────────────────────┐
│ IDENTIFY TARGET POSITION OF DISPLAY     │
│ BASED ON HEAD ANGLE OF USER, HEAD       │
│ POSITION OF USER, SHOULDER POSITION OF  │
│ USER, NECK POSITION OF USER, CHANGE     │──S810
│ AMOUNT IN HEAD POSITION OF USER, CHANGE │
│ AMOUNT IN SHOULDER POSITION OF USER,    │
│ CHANGE AMOUNT IN NECK POSITION OF USER, │
│ FIRST TARGET ANGLE, SECOND TARGET       │
│ ANGLE, AND THIRD TARGET POSITION        │
└────────────────────┬───────────────────┘
                     │
                     ▼
┌────────────────────────────────────────┐
│ CONTROL DRIVER TO ADJUST POSITION OF    │──S820
│ DISPLAY TO IDENTIFIED TARGET POSITION   │
└────────────────────┬───────────────────┘
                     │
                     ▼
              ┌─────────────┐
              │     END     │
              └─────────────┘
```

# FIG. 8B

# FIG. 8C

# FIG. 9

# FIG. 10A

```
                    ┌─────────────┐
                    │    START    │
                    └──────┬──────┘
                           │
                           ▼
              ╱────────────────────────╲
         N   ╱        IS DISTANCE        ╲
    ◄───────╱ BETWEEN HEAD POSITION OF USER╲─── S1010
            ╲ AND DISPLAY LESS THAN PRESET ╱
             ╲          VALUE?            ╱
              ╲────────────────────────╱
                        │ Y
                        ▼
              ╱────────────────────────╲
         N   ╱         IS USER'S         ╲
    ◄───────╱  GAZE TIME ON DISPLAY LESS THAN╲─── S1020
            ╲         PRESET TIME         ╱
              ╲────────────────────────╱
                        │ Y
                        ▼
    ┌────────────────────────────────────────────┐
    │ IDENTIFY THAT USER HAS INTENT TO STAND UP AND│
    │   CONTROL DRIVER TO CAUSE  MOBILE ROBOT      │── S1030
    │ TO PERFORM EVASIVE MOVEMENT BASED ON USER'S  │
    │              STANDING STATE                  │
    └──────────────────────┬───────────────────────┘
                           │
                           ▼
                    ┌─────────────┐
                    │     END     │
                    └─────────────┘
```

41

# FIG. 10B

# FIG. 11A

```
                    ┌─────────────┐
                    │    START    │
                    └──────┬──────┘
                           │
                           ▼
┌──────────────────────────────────────────────┐
│ IDENTIFY EVASIVE MOVEMENT POSITION INFORMATION OF │
│  MOBILE ROBOT BASED ON INFORMATION ON SHOULDER   │──S1110
│ POSITION OF USER AND CURRENT POSITION INFORMATION │
│              OF MOBILE ROBOT                     │
└──────────────────────────────────────────────┘
                           │
                           ▼
┌──────────────────────────────────────────────┐
│      CONTROL DRIVER TO CAUSE MOBILE ROBOT TO     │
│ PERFORM EVASIVE MOVEMENT BASED ON EVASIVE MOVEMENT │──S1120
│      POSITION INFORMATION OF MOBILE ROBOT        │
└──────────────────────────────────────────────┘
                           │
                           ▼
                    ┌─────────────┐
                    │     END     │
                    └─────────────┘
```

# FIG. 11B

# FIG. 11C

# FIG. 11D

# FIG. 12A

START

↓

S1210 — DOES USER GAZE AT DISPLAY FOR PRESET TIME OR LONGER BASED ON SENSING DATA?

N →

Y ↓

S1220 — DOES DISTANCE BETWEEN DISPLAY AND FINGER DECREASE OVER TIME BASED ON INFORMATION ON FINGER POSITION OF USER IDENTIFIED BASED ON SENSING DATA

N →

Y ↓

S1230 — DOES HEIGHT OF WRIST INCREASE OVER TIME BASED ON INFORMATION ON WRIST HEIGHT OF USER IDENTIFIED BASED ON SENSING DATA

N →

Y ↓

S1240 — DOES INFORMATION ON FINGER GESTURE OF USER IDENTIFIED BASED ON SENSING DATA CORRESPOND TO ANY ONE OF PLURALITY OF PIECES OF REFERENCE IMAGES CORRESPONDING TO TOUCH GESTURE OF USER?

N →

Y ↓

S1250 — CONTROL DRIVER TO ADJUST POSITION OF DISPLAY

↓

END

# FIG. 12B

# FIG. 12C

# FIG. 12D

# FIG. 13A

START

IS TOUCH
INPUT OF USER ENDED BASED ON
INFORMATION ON FINGER POSITION
OF USER

N

Y

~S1310

CONTROL DRIVER TO RETURN MOBILE ROBOT
TO EXISTING VIEWING POSITION OF USER BASED
ON INFORMATION ON SHOULDER POSITION OF USER

~S1320

END

# FIG. 13B

# FIG. 13C

# FIG. 14

100'

140

| 110 AT LEAST ONE SENSOR | 140 PROCESSOR | 160 SPEAKER |
|---|---|---|
| 120 DISPLAY | | 170 USER INTERFACE |
| 130 DRIVER | | 180 COMMUNICATION INTERFACE |
| 150 MICROPHONE | | 190 MEMORY |

## INTERNATIONAL SEARCH REPORT

| | International application No. |
|---|---|
| | **PCT/KR2024/005746** |

| A. | CLASSIFICATION OF SUBJECT MATTER |
|---|---|

**B25J 13/08**(2006.01)i; **B25J 5/00**(2006.01)i; **B25J 9/16**(2006.01)i; **B25J 11/00**(2006.01)i; **G06V 40/18**(2022.01)i; **G06V 40/20**(2022.01)i; **G06F 3/04883**(2022.01)i; **G06F 3/041**(2006.01)i

According to International Patent Classification (IPC) or to both national classification and IPC

| B. | FIELDS SEARCHED |
|---|---|

Minimum documentation searched (classification system followed by classification symbols)

B25J 13/08(2006.01); B25J 19/00(2006.01); B25J 5/00(2006.01); B25J 9/00(2006.01); B25J 9/06(2006.01); B33Y 10/00(2015.01); B33Y 30/00(2015.01); H04R 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이(display), 센서(sensor), 자세(pose), 위치(position), 각도(angle), 제스처 (gesture)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-084628 A (FUJI XEROX CO., LTD.) 06 June 2019 (2019-06-06) See paragraphs [0036], [0041]-[0046], [0052], [0056], [0057], [0059] and [0062] and figures 3-8. | 1,14,15 |
| A | | 2-13 |
| A | KR 10-2010-0086207 A (SAMSUNG ELECTRONICS CO., LTD.) 30 July 2010 (2010-07-30) See paragraphs [0028], [0030], [0032], [0035], [0039] and [0059]-[0066] and figures 1-4. | 1-15 |
| A | KR 20-0441761 Y1 (DASAROBOT CO., LTD.) 05 September 2008 (2008-09-05) See paragraphs [0026], [0028], [0036], [0037], [0039] and [0057] and figures 1-4. | 1-15 |
| A | WO 2020-222735 A1 (GOOGLE LLC) 05 November 2020 (2020-11-05) See paragraphs [0033] and [0034] and figures 1a-3. | 1-15 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2024** | **14 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/005746** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2020-0087337 A (SAMSUNG ELECTRONICS CO., LTD.) 21 July 2020 (2020-07-21) See paragraphs [0042], [0048], [0051] and [0096] and figures 1-4c. | 1-15 |

Form PCT/ISA/210 (second sheet) (July 2022)

**INTERNATIONAL SEARCH REPORT**
Information on patent family members

International application No.

**PCT/KR2024/005746**

| Patent document cited in search report | | | Publication date (day/month/year) | Patent family member(s) | | | Publication date (day/month/year) |
|---|---|---|---|---|---|---|---|
| JP | 2019-084628 | A | 06 June 2019 | None | | | |
| KR | 10-2010-0086207 | A | 30 July 2010 | KR | 10-1496909 | B1 | 27 February 2015 |
| | | | | US | 2010-0180709 | A1 | 22 July 2010 |
| | | | | US | 8698965 | B2 | 15 April 2014 |
| KR | 20-0441761 | Y1 | 05 September 2008 | None | | | |
| WO | 2020-222735 | A1 | 05 November 2020 | CN | 113424124 | A | 21 September 2021 |
| | | | | EP | 3894972 | A1 | 20 October 2021 |
| | | | | EP | 3894972 | B1 | 08 November 2023 |
| | | | | EP | 4350455 | A2 | 10 April 2024 |
| | | | | JP | 2022-529868 | A | 27 June 2022 |
| | | | | JP | 2023-179542 | A | 19 December 2023 |
| | | | | JP | 7386876 | B2 | 27 November 2023 |
| | | | | KR | 10-2021-0110684 | A | 08 September 2021 |
| | | | | US | 11164582 | B2 | 02 November 2021 |
| | | | | US | 11727931 | B2 | 15 August 2023 |
| | | | | US | 2020-0342864 | A1 | 29 October 2020 |
| | | | | US | 2022-0165266 | A1 | 26 May 2022 |
| | | | | US | 2023-0395074 | A1 | 07 December 2023 |
| KR | 10-2020-0087337 | A | 21 July 2020 | US | 2021-0394369 | A1 | 23 December 2021 |
| | | | | WO | 2020-141727 | A1 | 09 July 2020 |

Form PCT/ISA/210 (patent family annex) (July 2022)